(19) Europäisches Patentamt
European Patent Office
Office européen des brevets

(11) EP 4 419 735 B1

(12) **EUROPEAN PATENT SPECIFICATION**

(45) Date of publication and mention of the grant of the patent:
**26.11.2025 Bulletin 2025/48**

(21) Application number: **22809509.7**

(22) Date of filing: **24.10.2022**

(51) International Patent Classification (IPC):
***C25B 1/04*** *(2021.01)* ***C25B 9/05*** *(2021.01)*
***C25B 9/13*** *(2021.01)* ***C25B 9/75*** *(2021.01)*
***C25B 11/031*** *(2021.01)* ***C25B 15/021*** *(2021.01)*
***H01M 4/86*** *(2006.01)* ***H01M 8/04007*** *(2016.01)*
***H01M 8/04276*** *(2016.01)* ***H01M 8/1004*** *(2016.01)*
***H01M 8/18*** *(2006.01)*

(52) Cooperative Patent Classification (CPC):
**C25B 1/04; C25B 9/05; C25B 9/13; C25B 9/75; C25B 11/031; C25B 15/021; H01M 4/8668; H01M 8/04007; H01M 8/04276; H01M 8/1004; H01M 8/186;** H01M 8/083; H01M 2300/0014; Y02E 60/36; Y02P 20/133

(86) International application number:
**PCT/IB2022/060190**

(87) International publication number:
**WO 2023/067581 (27.04.2023 Gazette 2023/17)**

(54) **METHOD FOR THE PRODUCTION OF HYDROGEN**

VERFAHREN ZUR HERSTELLUNG VON WASSERSTOFF

PROCÉDÉ POUR LA PRODUCTION D'HYDROGÈNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.10.2021 IT 202100027230**

(43) Date of publication of application:
**28.08.2024 Bulletin 2024/35**

(73) Proprietor: **Hydep S.r.l.**
**26900 Lodi (LO) (IT)**

(72) Inventors:
- **CREMONESI, Lorenzo**
  **26020 Palazzo Pignano CR (IT)**
- **DRAGONI, Matteo**
  **26823 Castiglione d'Adda LO (IT)**
- **DRAGONI, Mario**
  **26823 Castiglione d'Adda LO (IT)**

(74) Representative: **Manfrin, Marta et al**
**Società Italiana Brevetti S.p.A.**
**Via Carducci 8**
**20123 Milano (MI) (IT)**

(56) References cited:
**US-A1- 2021 238 754**

- **MARINI STEFANIA ET AL: "Advanced alkaline water electrolysis", ELECTROCHIMICA ACTA, vol. 82, 16 March 2012 (2012-03-16), pages 384 - 391, XP028939113, ISSN: 0013-4686, DOI: 10.1016/J.ELECTACTA.2012.05.011**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 419 735 B1

## Description

### FIELD OF THE INVENTION

The present invention relates, in general, to a method for the production of hydrogen and oxygen by electrolysis of water by means of a respective device for the electrolysis of water, also called electrolyser.

### STATE OF THE ART

Hydrogen is considered the energy carrier of the future, as it allows the massive storage of renewable energy sources and, in addition, the dissociation of water by electrolysis allows the production of hydrogen and oxygen without any trace of carbon compounds. The apparatus that allows the dissociation of water into hydrogen and oxygen under the effect of an electric current is an electrochemical reactor called water electrolyser or, simply, electrolyser. There are various technologies for water electrolysis, and in particular for low temperature electrolysis, wherein polymeric membranes are used, and for high temperature electrolysis, wherein ceramic membranes are used.

Among the low temperature water electrolysis techniques there is the alkaline water electrolysis (AWE) which typically operates between ambient temperature and 80°C, with operating pressures of about 30 bar, and consists in the electrolysis of aqueous solutions of potassium hydroxide (KOH) or sodium hydroxide (NaOH). The anodic and cathodic compartments are separated by a porous diaphragm, impregnated with an electrolytic solution and permeable to the passage of electric current due to ionic transport of $OH^-$. Another low temperature electrolysis is AEM (Anion Exchange Membrane) or AEMWE (Anion Exchange Membrane Water Electrolysis) which uses a membrane with a selective ionic conductivity through hydrated hydroxyl ions ($OH^-$). Lastly, the polymeric membrane electrolysis (Proton Exchange Membrane) typically operates between ambient temperature and 80°C, with operating pressures of about 35 bar and consists in replacing the conventional liquid electrolyte with an ion-conduction membrane of the ionomer type that operates up to about 150°C.

The disadvantage of these electrolysers is to use polymeric membranes that can only operate between ambient temperature and about 150°C, beyond which they would be irreversibly damaged.

The electrolysis of water at high temperature comprises the electrolysis technique carried out using solid oxide electrolysers (SOEC), which use ceramic membranes consisting of a solid electrolyte interposed between two porous electrodes that allow the dissociation of the water. Their working temperature is in the range of 500°C - 1000°C and the operating pressure is generally 10 bar. The cell is fed to the cathode with water vapour which is dissociated into hydrogen gas and superoxide ions ($O^{2-}$). The gaseous hydrogen is collected at the cathode while the superoxide ions ($O^{2-}$) migrate through the electrolyte towards the anode where the oxidation reaction takes place. The most commonly used traditional solid oxide cells consist of an electrolyte based on zirconium oxide stabilised with yttrium oxide, a compound used because it has excellent ionic conductivity at temperatures between 800°C - 1000°C. The high temperature ensures high voltage efficiency as there is an significant contribution of thermal energy.

The disadvantages of these electrolysers is that they use water in the vapour state, and expensive materials to allow the cell to operate at high temperatures. Among the most relevant prior art documents, the patent EP2836625B1 (Allebrod) is cited, in which it is envisaged that potassium hydroxide (KOH) is immobilised in a porous ceramic element of the type, $Ti_2AlC$, $Ti_3AlC_2$ and $Ti_3SiC_2$. In addition, it provides the injection of water to the cathode in the gaseous state. Patent application WO2004/113590 A2 (Melosi) focuses on the use of a cam system that applies a compression-decompression process of the alkaline solution of potassium hydroxide (KOH) which is capable of wetting the electrodes, which polarised will produce gas. In order to reach the desired temperature it is necessary to use external energy to heat the electrodes. US 2021/238754 A1 relates to an apparatus for the production and separation of gases, by electrolysis of an electrolytic solution. Marini et al., Electrochimica Acta, 82, 2012, 384-391 relates to alkaline water electrolysis.

### SUMMARY OF THE INVENTION

The technical problem posed and solved by the invention is to develope a method for the production of hydrogen and oxygen by electrolysis of water with high voltage efficiency, which is capable of operating at high temperatures without damaging the system.

This problem is solved by a method for the production of hydrogen and oxygen by electrolysis of water by means of a water electrolysis device or electrolyser as defined in the respective independent claim. Secondary features are defined in the dependent claims.

At the basis of the present disclosure there is the recognition that alkaline electrolysis technology can be used with high temperature and pressure (AWE-HTP), that is to say, AWE-HTP, instead of the traditional technology working at a temperature above 150°C, as well as verifying that the pressure is greater than the minimum for maintaining the liquid state of the electrolyte, and appropriately determining the % of KOH. This allows to make the process endoenergetic rather than

exoenergetic. In fact, it is possible to obtain conditions of efficiency of the technology which is favoured by the increase in temperature but reduced by the effect of pressure increase since the pressure effect is logarithmic and that of temperature is linear; as the temperature and pressure increase the process is in any case favourable.

The cell voltage, after exceeding 150°C, will be lower than the reversible one and therefore, the component that is lacking in terms of electrical power is provided in terms of thermal power. This results, for example over 200°C, into efficiencies greater than 100%.

More specifically, a method for the electrolysis of water is developed using a high temperature and pressure alkaline electrolyser (AWE-HTP) for the electrolysis of water. The electrolyser comprises at least one reversible cell for electrolysis; a mixing tank for mixing water and potassium hydroxide to form an aqueous alkaline solution of KOH; feeding means for feeding said alkaline aqueous KOH solution under pressure into said channel from said mixing tank; control means for controlling the pressure inside the channel in order to control the passage of water through a hydrophobic layer of the multilayer electrodes of the cell, and a heat exchanger for heating the aqueous solution.

The above-mentioned reversible cell for electrolysis comprises at least two multilayer electrodes, wherein said multilayer electrodes are arranged facing each other to define the passage channel for the aqueous solution of KOH, and wherein each of said multilayer electrodes comprises, starting from said channel, said hydrophobic layer, a catalyst layer for catalysing a reduction step of said hydrogen or an oxidation step of said oxygen, a porous electrode layer for causing said reduction or said oxidation to take place, and a bipolar plate.

The hydrophobic layer comprises aluminosilicate geopolymers or polytetrafluoroethylene polymers (PTFE) or perfluoroalkoxy polymers (PFA) or a 1 $\mu$ -3$\mu$ film obtained by means of the PACVD (Plasma-Assisted Chemical Vapour Deposition) process.

The passage channel has an inlet connected to said feeding means, and an outlet. More specifically, said mixing tank, the feeding means, the control means for controlling the pressure, the heat exchanger and the at least one reversible cell for electrolysis are connected in series to form a closed circuit.

The aqueous alkaline solution has in the channel a concentration of potassium hydroxide (KOH) of between 35% and 55% w/v, is at a temperature of between 150°C and 374°C, and in a condition of minimum pressure of between 2.2 bar and 129.1 bar. The method therefore comprises

I) preparing in the mixer the aqueous alkaline solution of KOH having a concentration of potassium hydroxide (KOH) of between 35% and 55% w/v;
II) heating said aqueous alkaline solution to a temperature of between 150°C and 374°C;
III) increasing the pressure to keep the aqueous alkaline solution in the liquid phase at a minimum pressure condition of between 2.2 bar and 129.1 bar;
IV) forcing the water into said channel so that the water passes through the hydrophobic layer of each electrode and reaches the respective catalyst layer to catalyse a reduction phase of said hydrogen or an oxidation phase of said oxygen and the porous electrode layer to bring about said reduction and said oxidation respectively;
V) collecting gaseous hydrogen and oxygen released from step IV).

As mentioned, the minimum pressure in the channel is such as to allow the water to pass through the hydrophobic layer. The hydrophobic layer is in fact a barrier configured to contain/limit the passage of water in the channel and allow the passage of the aqueous alkaline solution towards the electrode layer only when the pressure of the aqueous solution of KOH is greater than the pressure present in the electrodes.

In other words, the hydrophobic layer is a layer of each of the electrodes which allows to the flow of the aqueous solution of KOH between the electrodes themselves to be maintained. The process water will "drip" through the hydrophobic layer and reach the catalyst layer, only if the electrolyte pressure is greater than the pressure present in the electrodes. In other words, the condition wherein the passage of the aqueous alkaline solution towards the electrode layer is allowed corresponds to a condition wherein an electrolyte pressure is greater than the pressure present in the electrodes. In other words, the solution oozes through the hydrophobic layer. The polarized electrode layer will give rise to the electrolysis process.

It follows that on the basis of the invention there is the intuition that a highly efficient process can be obtained by a combination of operating conditions, such as high temperature above 150°, a pressure such to maintain KOH in liquid form, and at an optimal concentration of KOH (between 35% w/v and 55% w/v) in order to guarantee the liquid form and optimal conductivity, with a cell structure for electrolysis that withstands high temperatures and allows KOH to be directed in a controlled way in a specific space in the electrode.

Preferably, the water electrolysis device comprises a plurality of said cells arranged in a stack, to form a so-called stack of cells.

In other words, in accordance with the invention, the authors of the present invention have understood that under the operating conditions identified above, that is to say, ranges of KOH concentration of from 35 to 55% in w/v, and minimum operating pressures from about 2.2 to 129.1 bar (in these conditions the electrolytic aqueous alkaline solution is

in the liquid state thanks to the increase in process pressure), it is possible to operate at high temperatures, in particular for example in a range of between 150°C and 374°C, obtaining an increase in voltage efficiency. In general, within the scope of the present disclosure, the minimum pressures indicated are to be understood as minimum pressures to maintain the aqueous alkaline solution in a liquid state. It is to be understood that nothing prevents it from being possible to operate at higher pressures.

The reversible cell for the electrolysis of the water according to the invention, compared to those described in the prior art documents, has therefore the advantage of operating at high temperatures and pressures, without damaging the cell in any way and maintaining the electrolytic aqueous alkaline solution in the liquid state, thus overcoming the disadvantages of the prior art electrolytic cells described in the previous chapter.

Other advantages, characteristics and methods of use of the invention will become evident from the following detailed description of some embodiments, presented by way of non-limiting examples.

## BRIEF DESCRIPTION OF THE DRAWINGS

The invention and the following detailed description of the preferred embodiments can be better understood with reference to the following drawings:

**Figure 1a** shows a graph of a phase transition of the KOH-based alkaline solution (with different percentages of KOH by weight).

**Figure 1b** shows another graph of the phase transition of the KOH-based alkaline solution (with different percentages of KOH by weight).

**Figure 2** shows a graph relative to the phase transition of the water.

**Figure 3** shows a voltage-temperature graph of an electrolyser operating at high temperature and pressure maintaining the process fluid in the liquid state.

**Figure 4** shows a conductivity-temperature graph with different quantities by weight of KOH in the alkaline solution.

**Figure 5** shows a voltage-pressure graph of a generic electrolyser.

**Figure 6** shows a voltage-temperature graph at different pressures.

**Figure 7** shows a cell voltage-current density graph.

**Figure 8** shows an efficiency-temperature graph referred to various approaches to calculating efficiency.

**Figure 9** shows a schematic view of a multilayer electrode according to an embodiment of the invention.

**Figure 10** shows a schematic view of a device for the electrolysis of water according to an embodiment of the invention.

## DETAILED DESCRIPTION OF THE INVENTION

The invention relates to a method for the production of hydrogen and oxygen by electrolysis of water. With reference to the drawings and in particular Figures 9 and 10, the electrolysis takes place in a reversible cell 1 for the electrolysis of water. The cell 1 comprises two multilayer electrodes 1a and 1b, wherein said multilayer electrodes are arranged facing each other to define a channel 2 for the passage of an aqueous alkaline solution.

The aqueous alkaline solution comprises an electrolyte and at least ions comprising hydrogen and oxygen. Each of said electrodes 1a, 1b comprises a hydrophobic layer 3, an electrode layer 4, a catalyst layer 5 and a bipolar plate 6. The hydrophobic layer is a layer facing towards the channel 2. For this reason, starting from channel 2, each multilayer electrode 1a, 1b, comprises the hydrophobic layer 3, the electrode layer 4, the catalyst layer 5 and a bipolar plate 6. In practice, the cell has two identical opposite electrodes, for each electrode starting from the channel the hydrophobic layer, the electrode layer, the catalyst layer and the bipolar plate.

Preferably, to allow a continuous passage of the aqueous alkaline solution, the channel 2 has an inlet 2a for the aqueous alkaline solution and an outlet 2b.

The hydrophobic layer 3 is configured to oppose the passage of the aqueous alkaline solution towards the electrode layer 4 of the electrodes and said passage of process water is allowed when the pressure of the electrolyte is greater than the pressure present in the electrodes. In other words, the hydrophobic layer allows the passage of process water only under certain pressure conditions, but if these pressure conditions do not occur, it opposes the passage, in its entirety, of the aqueous solution. The process water will "drip" through the hydrophobic layer, reaching the catalytic layer, which when polarized will give rise to the electrolysis process.

According to the invention, said passage is allowed when the differential pressure is of a certain value depending on the operating conditions which depend on the pressures in place, on the electrolyte concentrations (that is, of the KOH solution), on the temperature and on the nature of the hydrophobic layer.

The catalyst layer 5 is configured to catalyse a reduction phase of said hydrogen or an oxidation phase of said oxygen and the porous electrode layer 4 to carry out said reduction or said oxidation.

The bipolar plate 6 acts as a current distributor and provides a mechanical support for the electrodes.

According to the context of the present disclosure, the term "electrolysis cell" or "electrolytic cell" refers to a particular electrochemical cell which allows the conversion of electrical energy into chemical energy during the electrolysis process.

The adjective "reversible" refers to the possibility of the cell to operate both as an electrolyser and as a fuel cell, that is, a cell having the purpose of producing energy by exploiting hydrogen.

The electrical energy necessary to carry out the process is supplied by an external electrical circuit, connected to the poles of the cell, so the electrolysis process does not occur spontaneously. The electrolysis of water, from which $H_2$ and $O_2$ is obtained, takes place with a significant contribution of thermal energy, with a consequent increase in voltage efficiency, and allows the production of gas at high pressure.

The heat of reaction $\Delta H^{\circ}_{298}$, evaluated at the temperature of 25°C and at the pressure of 1 Atm, is a function of the entropy of reaction $\Delta S^{\circ}_{298}$ and of the Gibbs free energy $\Delta G^{\circ}_{298}$, according to the relationship:

$$\Delta H^{\circ}_{298} = \Delta G^{\circ}_{298} + T \times \Delta S^{\circ}_{298} \quad (1)$$

With:

$$\Delta H^{\circ}_{298} = 68.32\ \frac{\text{kcal}}{\text{mol}} \quad (2)$$

$$\Delta G^{\circ}_{298} = 56.71\ \frac{\text{kcal}}{\text{mol}} \quad (3)$$

$$\Delta S^{\circ}_{298} = 38.96 \cdot 10^{-3}\ \frac{\text{kcal}}{\text{mol K}} \quad (4)$$

The electrical work required defines the minimum, or reversible, voltage at which water can be split by electrolysis. At the temperature of 25°C and at the pressure of 1 Atm such voltage is:

$$U_{REV} = \frac{\Delta G^{\circ}_{298}}{2 \cdot F} = \frac{56.71 \cdot 10^{-3} \cdot 4{,}186}{2 \cdot 96500} = 1.23\ \text{V} \quad (5)$$

where two Faraday units (F), equal to 2 · 96500, are equivalent to approximately 53.6 Ah (the Ampere-hour, symbol Ah, is a practical unit of electric charge and represents the quantity of charge required to deliver an ampere of current per hour).

The minimum work required to split the water molecule into hydrogen and oxygen is a known value from thermodynamics. Water splitting is an endothermic chemical reaction, which requires a supply of heat from the outside to be conducted at a constant temperature. This can be achieved, in a simple manner, by exploiting the heat generated by the inevitable ohmic resistances opposed to the passage of the current: it is necessary to raise the cell voltage to the thermoneutral voltage.

$$U_{THERMONEUTRAL} = U_{TN} = 1.49\ \text{V} \quad (6)$$

Below this voltage the cell tends to cool down, due to the heat dissipation by the reaction. If, on the other hand, the internal resistances are such as to require a higher voltage, the cell must be equipped with a heat removal system.

It is generally of interest to evaluate the energy costs necessary to carry out the electrolysis. Referring for convenience to $Nm^3$, the standard unit of of gas volume under standard conditions, the quantity of current required to produce a $Nm^3$ of hydrogen in one hour can be evaluated as follows:

$$1\,\frac{\text{Nm}^3}{\text{h}} \cdot \frac{1}{22.414}\,\frac{\text{kmol}}{\text{Nm}^3} \cdot 53.6\,\frac{\text{Ah}}{\text{mol}} = 2393\ \text{A} \quad (7)$$

which at the thermoneutral voltage leads to a specific electricity consumption, equal to:

$$W_{id} = \frac{2393\ A \cdot 1.49\ V}{1\ Nm^3/h} = 3.56 \frac{kWh}{Nm^3} \quad (8)$$

However, this value will necessarily be greater than the neutral value due to the losses, so it is customary to indicate as the voltage efficiency $\eta_U$ the relationship:

$$\eta_U = \frac{U_{thermoneutral}}{U_{real}} \quad (9)$$

The current flow is also greater than the ideal minimum: a part of the flow, in fact, escapes the electrolysis by traveling through the distribution system of the alkaline solution to the individual cells. The current yield $\eta_I$ is defined as follows:

$$\eta_I = \frac{I_{ideal}}{I_{real}} \quad (10)$$

The real specific consumption of electricity is:

$$W = \frac{3.56 \frac{kWh}{Nm^3}}{\eta_U \cdot \eta_I} \quad (11)$$

According to the context of the present disclosure, the term "aqueous solution" refers to a solution in which the solvent includes water.

Aqueous solutions that contain strong electrolytes conduct the electric current efficiently, conversely, those with weak electrolytes are poor conductors. The term "strong electrolytes" means substances that are completely ionized in water, while weak electrolytes are only partially ionized.

According to the context of the present disclosure, the term "hydrophobic" refers to the physical property of a chemical species and/or material to repel, not absorb, retain and/or not interact in any way with water.

Hydrophobic chemical species and/or materials tend to be electrically neutral and apolar.

According to the context of the present disclosure, the term "catalyst" means a chemical species which is capable of lowering the activation energy of the electrolysis reaction, increasing its speed, and which remains unchanged.

In the context of the present disclosure, the term "electrode" refers to a conductor used to establish an electrical contact with a non-metallic part of a circuit, such as, for example, an electrolyte.

According to the context of the present disclosure, the terms "oxidation" and "reduction" refer to reactions in which the oxidation number of at least one chemical species varies, in particular, in the case of oxidation the oxidation number increases because the chemical species loses electrons, while in the reduction the oxidation number decreases because the chemical species acquires electrons. The chemical species that acquires electrons is called the "oxidant", while the one that donate electrons is called the "reducing agent".

The equation that describes the electrolysis process of water is an oxidation-reduction reaction, which is represented below:

$$2H_2O_{(aq)} \rightarrow 2H_{2(g)} + O_{2(g)}$$

Water acts simultaneously as an oxidizing species and a reducing species, causing the reduction of hydrogen and the oxidation of oxygen. In particular, the electric current dissociates the water molecule into the $H^+$ and $OH^-$ ions. At the cathode, the hydrogen ions ($H^+$) acquire electrons, reducing and leading to the formation of molecular hydrogen ($H_2$). At the anode, the hydroxide ions ($OH^-$) release electrons, oxidizing and leading to the formation of molecular oxygen ($O_2$).

The term "bipolar plate" refers to an electrically conductive, gas-tight plate that separates individual cells into a single cell or in a stack, acting as a current distributor and providing mechanical support for the electrodes.

The hydrophobic layer 3 of the multi-layer electrodes 1a, 1b comprises aluminosilicate geopolymers or polytetrafluoroethylene polymers (PTFE) or perfluoroalkoxy polymers (PFA) or a 1-3 μm film obtained by means of the PACVD (Plasma-Assisted Chemical Vapour Deposition) process.

Preferably, the hydrophobic layer 3 of the multilayer electrodes 1a, 1b comprises aluminosilicate geopolymers or a 1-3 μm film obtained by means of the PACVD (Plasma-Assisted Chemical Vapour Deposition) process. Even more preferably, the hydrophobic layer 3 of the multilayer electrodes 1a, 1b comprises aluminosilicate geopolymers.

Even more preferably, the hydrophobic layer 3 of the multilayer electrodes 1a, 1b comprises a 1-3 μm film obtained by means of the PACVD (Plasma-Assisted Chemical Vapour Deposition) process.

According to the context of the invention, the term "aluminosilicate geopolymers" means a category of synthetic materials based on aluminosilicates, species in which some aluminium (Al) atoms replace silicon (Si) atoms. These are inorganic materials obtained from the reaction between a solid aluminosilicate and an activating aqueous alkaline solution. The aluminosilicate can be of natural origin, synthetic or an industrial by-product and the activating aqueous alkaline solution contains silicates and alkaline hydroxides. The main features are: high resistance to the bases, a necessary condition for the invention in object, high heat resistance and impermeability, as the geopolymer matrix is endowed with mesoporosity, that is, it has many but very small pores, so it is impermeable to the passage of water or other large molecules. In order to deposit the geopolymer on porous elements, the "Deep Coating" technique is used (e.g. 1 cm/min).

The term "polytetrafluoroethylene polymer (PTFE)" refers to a polymer belonging to the class of perfluorocarbons deriving from the homopolymerization of tetrafluoroethene. It can be described as a hydrophobic, inert, smooth and high temperature resistant plastic material. It is characterised by a very low friction coefficient.

The perfluoroalkoxy polymer (PFA) is a fluoropolymer with properties similar to those of PTFE; in fact it is also characterised by hydrophobia, resistance to high temperatures, a low friction coefficient and is inert, however it is less easy to find. With the PACVD process (Plasma Assisted-Chemical Vapour Deposition) a colourless and thin film of a few micrometres (about 1- 3μm) of amorphous carbon-silicon coating (a-C:H:Si) is obtained; the high-energy but low-temperature plasma makes the treated surfaces water-repellent, gives the electrodes high thermal stability (500°C) and excellent resistance to the chemical agents.

In order to carry out the electrolysis of water, the cell, or preferably a stack of cells, are arranged inside a circuit to form a device for the electrolysis of water. Said electrolysis device, called an electrolyser comprises in its entirety, preferably supported in a frame:

- a mixing tank 8 for mixing the electrolyte of the aqueous solution;
- feeding means 9 for feeding said aqueous alkaline solution under pressure into said channel 2, in particular at the inlet 2a of said channel 2;
- control means for controlling the pressure 10 inside the channel 2 in order to control the passage of water through the hydrophobic layer 3 of the multilayer electrodes;
- a heat exchanger 11 for heating the aqueous solution;
- at least one electrolysis cell 1 according to any one of the embodiments described herein.

Preferably, as mentioned above, the device comprises a plurality of electrolysis cells such as the one described above which are fixed to each other in a stack. The mixing tank 8, the feeding means 9, the control means 10 for controlling the pressure, said heat exchanger 11 and said electrolysis cell 1 are connected in series to form a closed circuit.

Preferably, the mixing tank 8 has a capacity in litres according to the characteristics of the machine.

The concentration of potassium hydroxide (KOH) is between 35% and 55% w/v. The alkaline solution has a conductivity of up to 4 S/cm.

Preferably, according to the embodiments described herein, the feeding means 9 is a pump.

The term "under pressure" refers to a condition wherein the operating pressure is higher than atmospheric pressure, at values such as those indicated above, and in general between 2.2 and 129.1 bar. This is a minimum pressure to keep the solution in liquid form.

The operating pressure depends mainly on the temperature and the concentration of KOH, and its purpose is to keep the solution in the aqueous state. A person skilled in the art can control and regulate the pressure and temperature, as well as the concentration of KOH to keep the solution in the liquid state, according to the preferred indications mentioned above.

Still preferably, the control means for controlling the pressure (10) is configured in such a way as to maintain a differential pressure of at least 0.2 bar inside the channel 2. More preferably, in accordance with all the embodiments described herein, the control means for controlling the pressure 10 is configured in such a way as to maintain a pressure of 80 bar inside the channel 2.

Preferably, according to any one of the embodiments described here, the control means for controlling the pressure 10 comprise a valve.

The term "heat exchanger" refers to an equipment in which a thermal energy exchange of a heat transfer fluid is carried out with another having a different temperature. The heat exchanger 11 allows operation at a temperature of between 150°C and 374°C.

The device 7 can be called a high temperature and pressure alkaline electrolyser (AWE-HTP).

In this high temperature and pressure alkaline electrolyser, the use of a diaphragm for the separation of gases is not envisaged, but of multilayer electrodes as shown in Figure 9. The hydrophobic layer 3 of the electrodes maintains the flow of the electrolyte between the electrodes themselves. The process water will pass the hydrophobic layer 3 in a controlled manner, reaching the catalytic layer which, when polarized, will give rise to the electrolysis process, only if the pressure of the electrolyte is greater than the pressure present in the electrodes (Figure 9).

The above-mentioned method comprises the following steps:

i. making process water available;
ii. mixing the process water and KOH to give an aqueous alkaline solution;
iii. heating said aqueous alkaline solution;
iv. increasing the pressure to maintain the aqueous alkaline solution in the liquid phase of KOH;
v. making the water "drip" through the hydrophobic state 3 of the multilayer electrode;
vi. electrolysis of water;
vii. collecting gaseous hydrogen and oxygen released from step vi.

As mentioned above, according to the invention, the aqueous solution is an alkaline solution. The term "alkaline solution" refers to a basic aqueous solution, that is, an aqueous solution with a pH of between 7.1 and 14.

According to the present disclosure, the alkaline solution comprises water and potassium hydroxide (KOH) and, even more preferably, the concentration of the potassium hydroxide (KOH) is between 35% and 55% w/v.

The concentrations of potassium hydroxide (KOH) shown in the description are expressed as percentage mass on volume (w/v), i.e., percentage of grams of KOH with respect to 100 g of solution. The percentage of KOH inside the solution impacts on the phase transition conditions, as shown in Figure 1. As the concentration in weight of KOH increases, the conditions for remaining in the liquid range are favourable with respect to pure water (the water phase diagram graph is shown in Figure 2).

In general, the alkaline solution can be at a temperature of between 150°C and 374°C. The temperature has a positive effect on the voltage, since, as it increases, the voltage required to carry out the electrolysis process decreases, as the contribution of thermal energy increases as per equation 13 (derived from the combination of formulas (1) and (5)).

$$U_{REV} = \frac{\Delta G}{2 \cdot F} = \frac{\Delta H - T \times \Delta S}{2 \cdot F} \qquad (12)$$

As the temperature increases, the component ($T \times \Delta S$) increases linearly leading to a decrease in $U_{REV}$, as shown in Figure 3.

Another preferred embodiment, according to any one of the embodiments described, is the alkaline solution under operating conditions with a conductivity up to 4 S/cm.

The conductivity $\sigma$ [S/cm] of the alkaline solution is a function of the temperature and the concentration of potassium hydroxide (KOH), according to equation 12 and is shown in Figure 4.

$$\sigma = C1 \cdot T^3 + C2 \cdot T^2 + C3 \cdot T + C4$$

$T [°C]$

$C1, C2, C3, C4$ coefficients

Coefficients value:

| wt% | 35 | 45 | 55 |
|---|---|---|---|
| C1 | -2.15E-07 | -1.78E-07 | -3.30E-07 |
| C2 | 6.44E-05 | 7.04E-05 | 1.06E-04 |
| C3 | 0.007675 | 0.005973 | 0.005205 |
| C4 | 0.329863 | 0.270575 | 0.21049 |

(13)

In order to increase the conductivity and, therefore, also the efficiency of the process, it is necessary to select an appropriate percentage by weight of KOH.

Furthermore, as indicated above, the alkaline solution is in a condition of pressure such that the pressure of the

electrolyte is greater than the pressure present in the electrodes.

The effect of pressure P on the $U_{REV}$ is stated in equation (14) (which can be obtained from equation (13) and the breakdown of $\Delta S$) and dependent on element (15)

$$U_{REV} = \frac{\Delta G}{2 \cdot F} = \frac{\Delta H}{2 \cdot F} - \frac{T}{2 \cdot F}\left(\Delta S_{React}^{Ref} + \sum_{P-R} z_{i,k} Cp_{i,k} \ln\left(\frac{T}{T_{ref}}\right) - R \sum_{P-R} z_{i,k} \ln\left(\frac{P}{P_{ref}}\right)\right) \quad (14)$$

The effect of the pressure is logarithmic and a function of the sign of the component (15):

$$\sum_{P-R} z_{i,k} \quad (15)$$

wherein:

$$z_{i,k} = \frac{moles\ of\ species\ k\ in\ mix\ i}{moles\ of\ fuel}$$

$$\rightarrow \sum_{P-R} z_{i,k} \begin{cases} > 0\ the\ reaction\ increases\ no.of\ moles\ of\ gas \\ = 0\ the\ reaction\ maintains\ no.of\ moles\ of\ gas \\ < 0\ the\ reaction\ decreases\ no\ of\ moles\ of\ gas \end{cases} \quad (16)$$

Defining P as Products and R as Reagents, observing the chemical formula of electrolysis (17):

$$\underbrace{\boxed{H_2O}}_{R} \rightarrow \underbrace{\boxed{\frac{1}{2}O_2 + H_2}}_{P} \quad (17)$$

Gives:

$$\sum_{P-R} z_{i,k} > 0 \quad (18)$$

As the pressure increases, the process voltage increases logarithmically according to equation 14). The voltage-pressure relationship is shown in Figure 5.

In conclusion, as T increases, V decreases linearly (Figure 3) and as P increases, V increases logarithmically (Figure 5). Hence, the linear contribution of temperature, with respect to the logarithmic one of pressure, is greater. Hence, according to the initial intuition of the authors, at the indicated KOH concentrations, having a high temperature and pressure remains a favourable situation as shown in Figure 6.

The following elements contribute to the value of the cell voltage (as shown in figure 7): reversible voltage ($U_{REV}$), voltage referred to the ohmic resistances of the cell ($R_{OHM} \cdot I_{Cell}$) and activation ($\eta_{ACT}$).

The effects of the activation and ohmic resistances can be considered almost independent on the temperature, instead $U_{REV}$, (as in Figure 3) decreases as the temperature increases. In conclusion, as the temperature increases, the cell voltage also decreases.

The efficiency can be calculated in the following ways:

$$\eta_{electric} = \frac{U_{TN@STP}}{U_{CELL}} \quad (19)$$

$$\eta_{LHV} = \frac{U_{REV@STP}}{U_{CELL}} \quad (20)$$

$$\eta_{HHV} = \frac{U_{TN@T,P}}{U_{CELL}} \qquad (21)$$

$$\eta_{E\ rev(T,P)} = \frac{U_{REV@T,P}}{U_{CELL}} \qquad (22)$$

In conclusion, as the temperature increases, the $U_{CELL}$ decreases, consequently each of the efficiencies increases according to Figure 8. In light of the above explanation, the electrolysis cell does not comprise a polymeric membrane and/or a ceramic membrane.

On the basis of the above explanation and the diagrams of Figures 1a and 1b, valid operating conditions can be established. For example, any of the following operating conditions may be foreseen.

At a temperature of 150°C the minimum pressure is between 2. 2 bar at a KOH concentration of 55% w/v and 3.3 bar at a KOH concentration of 35% w/v.

At a temperature of 160°C the minimum pressure is between 2.9 bar at a KOH concentration of 55% w/v and 4.2 bar at a KOH concentration of 35% w/v.

At a temperature of 170°C the minimum pressure is between 3.6 bar at a KOH concentration of 55% w/v and 5.4 bar at a KOH concentration of 35% w/v.

At a temperature of 180°C the minimum pressure is between 4.5 bar at a KOH concentration of 55% w/v and 6.8 bar at a KOH concentration of 35% w/v.

At a temperature of 190°C the minimum pressure is between 5.6 bar at a KOH concentration of 55% w/v and 8.5 bar at a KOH concentration of 35% w/v.

At a temperature of 200°C the minimum pressure is between 6.8 bar at a KOH concentration of 55% w/v and 10.5 bar at a KOH concentration of 35% w/v.

At a temperature of 210°C the minimum pressure is between 8.2 bar at a KOH concentration of 55% w/v and 12.7 bar at a KOH concentration of 35% w/v.

At a temperature of 220°C the minimum pressure is between 9.8 bar at a KOH concentration of 55% w/v and 15.4 bar at a KOH concentration of 35% w/v.

At a temperature of 230°C the minimum pressure is between 11.6 bar at a KOH concentration of 55% w/v and 18.4 bar at a KOH concentration of 35% w/v.

At a temperature of 240°C the minimum pressure is between 13.6 bar at a KOH concentration of 55% w/v and 21.8 bar at a KOH concentration of 35% w/v.

At a temperature of 250°C the minimum pressure is between 15.9 bar at a KOH concentration of 55% w/v and 25.7 bar at a KOH concentration of 35% w/v.

At a temperature of 260°C the minimum pressure is between 18.4 bar at a KOH concentration of 55% w/v and 30 bar at a KOH concentration of 35% w/v.

At a temperature of 270°C the minimum pressure is between 21.3 bar at a KOH concentration of 55% w/v and 34.9 bar at a KOH concentration of 35% w/v.

At a temperature of 280°C the minimum pressure is between 24.4 bar at a KOH concentration of 55% w/v and 40.4 bar at a KOH concentration of 35% w/v.

At a temperature of 290°C the minimum pressure is between 27.9 bar at a KOH concentration of 55% w/v and 46.5 bar at a KOH concentration of 35% w/v.

At a temperature of 300°C the minimum pressure is between 31.8 bar at a KOH concentration of 55% w/v and 53.3 bar at a KOH concentration of 35% w/v.

At a temperature of 310°C the minimum pressure is between 36 bar at a KOH concentration of 55% w/v and 60.8 bar at a KOH concentration of 35% w/v.

At a temperature of 320 C the minimum pressure is between 40.6 bar at a KOH concentration of 55% w/v and 69.1 bar at a KOH concentration of 35% w/v.

At a temperature of 330°C the minimum pressure is between 45.6 bar at a KOH concentration of 55% w/v and 78.1 bar at a KOH concentration of 35% w/v.

At a temperature of 340°C the minimum pressure is between 51.1 bar at a KOH concentration of 55% w/v and 88.1 bar at a KOH concentration of 35% w/v.

At a temperature of 350°C the minimum pressure is between 57 bar at a KOH concentration of 55% w/v and 98.9 bar at a KOH concentration of 35% w/v.

At a temperature of 360°C the minimum pressure is between 63.4 bar at a KOH concentration at 55% w/v and 110.8 bar at a KOH concentration at 35% w/v.

At a temperature of 370°C the minimum pressure is between 70.4 bar at a KOH concentration of 55% w/v and

123.6 bar at a KOH concentration of 35% w/v.

At a temperature of 374°C the minimum pressure is between 73.3 bar at a KOH concentration of 55% w/v and 129.1 bar at a KOH concentration of 35% w/v.

The expression "minimum pressure" means the lowest pressure which allows the aqueous alkaline solution to be maintained in the liquid state. It is to be understood that the operating pressure can therefore be even greater, and that the minimum pressure indicated is the minimum for the system to operate.

Further combinations of temperature, minimum pressure, and concentration of KOH and relative uses can be deduced from the table below,

| % KOH (w/v) | 35 | 45 | 55 |
|---|---|---|---|
| T [°C] | P min [bar] | P min [bar] | P min [bar] |
| 150 | 3.3 | 2.7 | 2.2 |
| 160 | 4.2 | 3.6 | 2.9 |
| 170 | 5.4 | 4.5 | 3.6 |
| 180 | 6.8 | 5.7 | 4.5 |
| 190 | 8.5 | 7.1 | 5.6 |
| 200 | 10.5 | 8.7 | 6.8 |
| 210 | 12.7 | 10.6 | 8.2 |
| 220 | 15.4 | 12.7 | 9.8 |
| 230 | 18.4 | 15.2 | 11.6 |
| 240 | 21.8 | 18 | 13.6 |
| 250 | 25.7 | 21.2 | 15.9 |
| 260 | 30 | 24.7 | 18.4 |
| 270 | 34.9 | 28.8 | 21.3 |
| 280 | 40.4 | 33.2 | 24.4 |
| 290 | 46.5 | 38.2 | 27.9 |
| 300 | 53.3 | 43.7 | 31.8 |
| 310 | 60.8 | 49.8 | 36 |
| 320 | 69.1 | 56.5 | 40.6 |
| 330 | 78.1 | 63.9 | 45.6 |
| 340 | 88.1 | 71.9 | 51.1 |
| 350 | 98.9 | 80.7 | 57 |
| 360 | 110.8 | 90.2 | 63.4 |
| 370 | 123.6 | 100.6 | 70.4 |
| 374 | 129.1 | 105 | 73.3 |

Considering the interdependence of the variables, all the combinations and ranges of said table for concentration, temperature and pressure must be considered valid within the present disclosure. Therefore, for example, at the concentration of 35% w/v of KOH, the minimum pressure varies between 3.3 and 129.1 bar between 150°C and 374°C, at the concentration of 45% w/v of KOH the minimum pressure varies between 3.3 and 105 bar between 150°C and 374°C, and at the concentration of 35% w/v of KOH, the minimum pressure varies between 2.2 and 73.3 bar between 150°C and 374°C.

If the hydrophobic layer is based on aluminosilicate geopolymers, the differential pressure is preferably at least 0.2 bar inside channel 2.

According to a preferred embodiment, with any of the hydrophobic layers indicated above, with a KOH concentration of 35% -50% w/v, preferably of 45% w/v, the operating conditions can be 200°C and the minimum pressure can be 8.7 bar, temperature of 250°C and the minimum pressure can be 21.2 bar, or temperature of 300°C and the minimum pressure can be 43.7 bar.

**Operational process**

The process diagram of the AWE-HTP is represented, in its main components, in Figure 10:

- At least one AWE-HTP water electrolysis cell (1);

- Feeding means (Pump) 9 of the alkaline solution (for example based on potassium hydroxide (KOH)) in the liquid state and process water in the liquid state
- Tank for collecting the alkaline solution and the eventual supply of process water.
- Heat exchanger 11 for the supply of thermal energy to the process, from an external source
- Control means (Valve) 10 configured to control, downstream of the electrolyser, the pressure and the "dripping" process.

The invention provides at least one electrolysis cell operating with an alkaline solution (for example KOH) in the liquid state.

The alkaline solution will circulate without coming into contact with the layers of the catalysed electrodes 5; this is because, instead of the membrane/diaphragm, the invention provides for the use of multilayer electrodes in which the last layer (the one in contact with the solution) is hydrophobic 3.

The electrolytic process will be possible, when the water can reach, in a controlled way, the electrode layer catalysed 5 and polarized 4 crossing the hydrophobic layer 3. In order to achieve this, the pressure of the alkaline solution must be increased, as it must overcome the resistance of the hydrophobic layer 3 itself.

In order to benefit from the above-mentioned advantages, the solution is heated in a heat exchanger 11 placed in series with the tank 8 and the pump 9.

In order to keep the alkaline solution and process water in the liquid phase, it will be necessary to increase and maintain the pressure of the cell, within the limits set according to the phase diagram of the alkaline solution (Figure 3).

Consequently, in order to ensure the passage of water through the hydrophobic layer 3, the pressure of the alkaline solution increases further and this can be achieved by controlling the "valve".

Further examples are shown below.

<u>Example 1</u>

T=150°C
%wt KOH=55% (percentage optimising conductivity at the defined temperature)
P=5 bar (P min @55 %wtKOH =2.2 bar)

| | | | | |
|---|---|---|---|---|
| T [°C] | 150 | | n electric | 94.1% |
| %wt KOH | 55% | | n LHV | 78.1% |
| P [bar] | 5.0 | | n HHV | 92.7% |
| P min [bar] | 2.2 | | n E rev(T,P) | 72.6% |

<u>Example 2</u>

T=200°C
%wt KOH = 45% (percentage optimising conductivity at the defined temperature)
P=10 bar (P min @45 %wtKOH =8.7 bar)

| | | | | |
|---|---|---|---|---|
| T [°C] | 200 | | n electric | 102.2% |
| %wt KOH | 45% | | n LHV | 84.8% |
| P [bar] | 10.0 | | n HHV | 99.9% |
| P min [bar] | 8.7 | | n E rev(T,P) | 76.8% |

<u>Example 3</u>

T=250°C
%wt KOH = 45% (percentage optimising conductivity at the defined temperature)
P=25 bar (P min @45 %wtKOH =21.2 bar)

| | | | | |
|---|---|---|---|---|
| T [°C] | 250 | | n electric | 111.8% |
| %wt KOH | 45% | | n LHV | 92.8% |
| P [bar] | 25.0 | | n HHV | 108.1% |
| P min [bar] | 21.2 | | n E rev(T,P) | 82.4% |

Example 4

T=300°C
%wt KOH = 45% (percentage optimising conductivity at the defined temperature)
P=50 bar (P min @45 %wtKOH =43.8 bar)

| | | | | |
|---|---|---|---|---|
| T [°C] | 300 | | n electric | 123.5% |
| %wt KOH | 45% | | n LHV | 102.5% |
| P [bar] | 50.0 | | n HHV | 117.3% |
| P min [bar] | 43.8 | | n E rev(T,P) | 89.4% |

Example 5

T=350°C
%wt KOH = 45% (percentage optimising conductivity at the defined temperature)
P=85 bar (P min @45 %wtKOH =80.7 bar)

| | | | | |
|---|---|---|---|---|
| T [°C] | 350 | | n electric | 137.8% |
| %wt KOH | 45% | | n LHV | 114.4% |
| P [bar] | 85.0 | | n HHV | 127.2% |
| P min [bar] | 80.7 | | n E rev(T,P) | 98.8% |

Example 6

T=374°C
%wt KOH = 45% (percentage optimising conductivity at the defined temperature)
P=110 bar (P min @45 %wt KOH =105.1 bar)

| | | | | |
|---|---|---|---|---|
| T [°C] | 374 | | n electric | 146.0% |
| %wt KOH | 45% | | n LHV | 121.2% |
| P [bar] | 110.0 | | n HHV | 132.1% |
| P min [bar] | 105.1 | | n E rev(T,P) | 104.7% |

In the table a summary of the data for the various operating conditions of the above examples is provided.

| | T [°C] | %wt KOH | P [bar] | P min [bar] | n electric | n LHV | n HHV | n E rev(T,P) |
|---|---|---|---|---|---|---|---|---|
| 1 | 150 | 55% | 5.0 | 2.2 | 94.1% | 78.1% | 92.7% | 72.6% |
| 2 | 200 | 45% | 10.0 | 8.7 | 102.2% | 84.8% | 99.9% | 76.8% |
| 3 | 250 | 45% | 25.0 | 21.2 | 111.8% | 92.8% | 108.1% | 82.4% |

(continued)

| | T [°C] | %wt KOH | P [bar] | P min [bar] | n electric | n LHV | n HHV | n E rev(T,P) |
|---|---|---|---|---|---|---|---|---|
| 4 | 300 | 45% | 50.0 | 43.8 | 123.5% | 102.5% | 117.3% | 89.4% |
| 5 | 350 | 45% | 85.0 | 80.7 | 137.8% | 114.4% | 127.2% | 98.8% |
| 6 | 374 | 45% | 110.0 | 105.1 | 146.0% | 121.2% | 132.1% | 104.7% |

## Claims

**1.** A method for the electrolysis of water to hydrogen and oxygen by means of an alkaline electrolyser (7) wherein the electrolyser comprises at least one reversible cell for electrolysis (1) comprising a channel; a mixing tank (8) for mixing water and potassium hydroxide (KOH) to form an aqueous alkaline solution of KOH; feeding means (9) for feeding said aqueous alkaline solution of KOH under pressure into said channel (2) from said mixing tank (8); control means for controlling the pressure (10) inside the channel (2) and a heat exchanger (11) for heating the aqueous alkaline solution of KOH;

wherein said reversible cell for electrolysis (1) comprises at least two multilayer electrodes (1a, 1b), wherein said multilayer electrodes (1a, 1b) are arranged facing each other to define the channel (2) for the passage of the aqueous alkaline solution of KOH, and wherein each of said multilayer electrodes (1a, 1b) comprises, starting from said channel (2), a hydrophobic layer (3), a catalyst layer (5) to catalyse a reduction step of said hydrogen or an oxidation step of said oxygen, a porous electrode layer (4) to bring about said reduction or said oxidation, and a bipolar plate (6), wherein said hydrophobic layer (3) comprises aluminosilicate geopolymers or polytetrafluoroethylene polymers (PTFE) or perfluoroalkoxy polymers (PFA) or a 1 μm -3 μm film of amorphous carbon-silicon coating obtained by the PACVD process (Plasma-Assisted Chemical Vapour Deposition); and wherein said channel (2) has an inlet connected to said supply means, and an outlet, and wherein said mixing tank (8), said supply means (9), said control means for controlling the pressure (10), said heat exchanger (11) and said at least one reversible electrolysis cell (1) are connected in series to form a closed circuit; and wherein
said aqueous alkaline solution of KOH has in the channel (2) a concentration of potassium hydroxide (KOH) of between 35% and 55% w/v, is at a temperature of between 150°C and 374°C, and is in a condition of minimum pressure between 2.2 bar and 129.1 bar, wherein said minimum pressure is at least the lowest pressure which allows the aqueous alkaline solution of KOH to be maintained in the liquid state, and wherein the method comprises

I) preparing in the mixer the aqueous alkaline solution of KOH having a concentration of potassium hydroxide (KOH) of between 35% and 55% w/v;
II) heating said aqueous alkaline solution of KOH to a temperature of between 150°C and 374°C;
III) increasing the pressure to keep the aqueous alkaline solution of KOH in the liquid phase at a minimum pressure condition of between 2.2 bar and 129.1 bar;
IV) forcing the water into said channel (2) so that the water passes through the hydrophobic layer (3) of each electrode and reaches the respective catalyst layer (5) to catalyse a reduction phase of said hydrogen or an oxidation phase of said oxygen and the porous electrode layer (4) to bring about said reduction and said oxidation respectively;
V) collecting gaseous hydrogen and oxygen released from step IV).

**2.** The method according to claim 1, wherein said aqueous alkaline solution of KOH is in any of the following conditions of temperature, pressure and KOH concentration:

- at a temperature of 150°C the minimum pressure is between 2.2 bar at a KOH concentration of 55% w/v and 3.3 bar at a KOH concentration of 35% w/v;
- at a temperature of 160°C the minimum pressure is between 2.9 bar at a KOH concentration of 55% w/v and 4.2 bar at a KOH concentration of 35% w/v;
- at a temperature of 170°C the minimum pressure is between 3.6 bar at a KOH concentration of 55% w/v and 5.4 bar at a KOH concentration of 35% w/v;
- at a temperature of 180°C the minimum pressure is between 4.5 bar at a KOH concentration of 55% w/v and 6.8 bar at a KOH concentration of 35% w/v;
- at a temperature of 190°C the minimum pressure is between 5.6 bar at a KOH concentration of 55% w/v and 8.5

bar at a KOH concentration of 35% w/v;
- at a temperature of 200°C the minimum pressure is between 6.8 bar at a KOH concentration of 55% w/v and 10.5 bar at a KOH concentration of 35% w/v;
- at a temperature of 210°C the minimum pressure is between 8.2 bar at a KOH concentration of 55% w/v and 12.7 bar at a KOH concentration of 35% w/v;
- at a temperature of 220°C the minimum pressure is between 9.8 bar at a KOH concentration of 55% w/v and 15.4 bar at a KOH concentration of 35% w/v;
- at a temperature of 230°C the minimum pressure is between 11.6 bar at a KOH concentration of 55% w/v and 18.4 bar at a KOH concentration of 35% w/v;
- at a temperature of 240°C the minimum pressure is between 13.6 bar at a KOH concentration of 55% w/v and 21.8 bar at a KOH concentration of 35% w/v;
- at a temperature of 250°C the minimum pressure is between 15.9 bar at a KOH concentration of 55% w/v and 25.7 bar at a KOH concentration of 35% w/v;
- at a temperature of 260°C the minimum pressure is between 18.4 bar at a KOH concentration of 55% w/v and 30 bar at a KOH concentration of 35% w/v;
- at a temperature of 270°C the minimum pressure is between 21.3 bar at a KOH concentration of 55% w/v and 34.9 bar at a KOH concentration of 35% w/v;
- at a temperature of 280°C the minimum pressure is between 24.4 bar at a KOH concentration of 55% w/v and 40.4 bar at a KOH concentration of 35% w/v;
- at a temperature of 290°C the minimum pressure is between 27.9 bar at a KOH concentration of 55% w/v and 46.5 bar at a KOH concentration of 35% w/v;
- at a temperature of 300°C the minimum pressure is between 31.8 bar at a KOH concentration of 55% w/v and 53.3 bar at a KOH concentration of 35% w/v;
- at a temperature of 310°C the minimum pressure is between 36 bar at a KOH concentration of 55% w/v and 60.8 bar at a KOH concentration of 35% w/v;
- at a temperature of 320 C the minimum pressure is between 40.6 bar at a KOH concentration of 55% w/v and 69.1 bar at a KOH concentration of 35% w/v;
- at a temperature of 330°C the minimum pressure is between 45.6 bar at a KOH concentration of 55% w/v and 78.1 bar at a KOH concentration of 35% w/v;
- at a temperature of 340°C the minimum pressure is between 51.1 bar at a KOH concentration of 55% w/v and 88.1 bar at a KOH concentration of 35% w/v;
- at a temperature of 350°C the minimum pressure is between 57 bar at a KOH concentration of 55% w/v and 98.9 bar at a KOH concentration of 35% w/v;
- at a temperature of 360°C the minimum pressure is between 63.4 bar at a KOH concentration at 55% w/v and 110.8 bar at a KOH concentration at 35% w/v;
- at a temperature of 370°C the minimum pressure is between 70.4 bar at a KOH concentration of 55% w/v and 123.6 bar at a KOH concentration of 35% w/v;
- at a temperature of 374°C the minimum pressure is between 73.3 bar at a KOH concentration of 55% w/v and 129.1 bar at a KOH concentration of 35% w/v.

**3.** The method according to claim 2, wherein said aqueous alkaline solution of KOH is in any of the conditions of temperature, minimum pressure and concentration of KOH indicated in the following table of values:

| % KOH (p/v) | 35 | 45 | 55 |
|---|---|---|---|
| T [°C] | P min [bar] | P min [bar] | P min [bar] |
| 150 | 3.3 | 2.7 | 2.2 |
| 160 | 4.2 | 3.6 | 2.9 |
| 170 | 5.4 | 4.5 | 3.6 |
| 180 | 6.8 | 5.7 | 4.5 |
| 190 | 8.5 | 7.1 | 5.6 |
| 200 | 10.5 | 8.7 | 6.8 |
| 210 | 12.7 | 10.6 | 8.2 |
| 220 | 15.4 | 12.7 | 9.8 |
| 230 | 18.4 | 15.2 | 11.6 |
| 240 | 21.8 | 18 | 13.6 |
| 250 | 25.7 | 21.2 | 15.9 |

(continued)

| % KOH (p/v) | 35 | 45 | 55 |
|---|---|---|---|
| T [°C] | P min [bar] | P min [bar] | P min [bar] |
| 260 | 30 | 24.7 | 18.4 |
| 270 | 34.9 | 28.8 | 21.3 |
| 280 | 40.4 | 33.2 | 24.4 |
| 290 | 46.5 | 38.2 | 27.9 |
| 300 | 53.3 | 43.7 | 31.8 |
| 310 | 60.8 | 49.8 | 36 |
| 320 | 69.1 | 56.5 | 40.6 |
| 330 | 78.1 | 63.9 | 45.6 |
| 340 | 88.1 | 71.9 | 51.1 |
| 350 | 98.9 | 80.7 | 57 |
| 360 | 110.8 | 90.2 | 63.4 |
| 370 | 123.6 | 100.6 | 70.4 |
| 374 | 129.1 | 105 | 73.3 |

**4.** The method according to any one of the preceding claims, wherein in said aqueous alkaline solution of KOH at the concentration of 35% w/v of KOH, the minimum pressure varies between 3.3 and 129.1 bar between 150°C and 374°C, at the concentration of 45% w/v of KOH the minimum pressure varies between 3.3 and 105 bar between 150°C and 374°C, and at the concentration of 35% *w/v* of KOH, the minimum pressure varies between 2.2 and 73.3 bar between 150°C and 374°C.

**5.** The method according to any one of claims 1 to 3, wherein said aqueous alkaline solution of KOH has a KOH concentration at 35% -50% w/v, preferably at 45% w/v, with a temperature of 200°C and a minimum pressure of 8.7 bar, temperature of 250°C and minimum pressure of 21.2 bar, or temperature of 300°C and minimum pressure of 43.7 bar.

**6.** The method according to any one of the preceding claims, wherein said control means (10) are a valve (10) and are configured to maintain a differential pressure condition between the inside of the channel (2) and the electrode layer.

**7.** The method according to any one of the preceding claims, wherein said hydrophobic layer (3) comprises aluminosilicate geopolymers or a 1 μm - 3μm film of amorphous carbon-silicon coating obtained by means of the PACVD (Plasma-Assisted Chemical Vapour Deposition) process.

**8.** The method according to any one of claims 1 to 6, wherein said hydrophobic layer (3) comprises aluminosilicate geopolymers.

**9.** The method according to any one of claims 1 to 6, wherein said hydrophobic layer (3) comprises a 1 μm - 3μm film of amorphous carbon-silicon coating obtained by the PACVD (Plasma-Assisted Chemical Vapour Deposition) process.

## Patentansprüche

**1.** Verfahren für die Elektrolyse von Wasser zu Wasserstoff und Sauerstoff mittels eines alkalischen Elektrolyseurs (7), wobei der Elektrolyseur mindestens eine reversible Zelle für die Elektrolyse (1) umfasst, umfassend einen Kanal; einen Mischbehälter (8) zum Mischen von Wasser und Kaliumhydroxid (KOH), um eine wässrige alkalischen Lösung von KOH auszubilden; Zuführmittel (9) zum Zuführen der wässrigen alkalischen Lösung von KOH unter Druck aus dem Mischbehälter (8) in den Kanal (2); Steuermittel zum Steuern des Drucks (10) im Inneren des Kanals (2) und ein Wärmetauscher (11) zum Erhitzen der wässrigen alkalischen Lösung von KOH;

wobei die reversible Zelle für die Elektrolyse (1) mindestens zwei Mehrschichtelektroden (1a, 1b) umfasst, wobei die Mehrschichtelektroden (1a, 1b) einander zugewandt angeordnet sind, um den Kanal (2) für den Durchgang der wässrigen alkalischen Lösung von KOH zu definieren, und wobei jede der Mehrschichtelektroden (1a, 1b), ausgehend von dem Kanal (2), eine hydrophobe Schicht (3), eine Katalysatorschicht (5), um einen Reduktionsschritt des Wasserstoffs oder einen Oxidationsschritt des Sauerstoffs zu katalysieren, eine poröse Elektrodenschicht (4), um die Reduktion oder die Oxidation herbeizuführen, und eine Bipolarplatte (6) umfasst, wobei die hydrophobe Schicht (3) Aluminosilicatgeopolymere oder Polytetrafluorethylenpolymere (PTFE) oder Perfluoralkoxypolymere (PFA) oder einen 1 µm-3 µm Film aus amorpher Kohlenstoff-Silizium-Beschichtung umfasst, die durch den PACVD-Prozess (Plasma-unterstützte chemische Gasphasenabscheidung) erhalten wird; und wobei der Kanal (2) einen Einlass, der mit den Versorgungsmitteln verbunden ist, und einen Auslass aufweist und wobei der Mischbehälter (8), die Versorgungsmittel (9), die Steuermittel zum Steuern des Drucks (10), der Wärmetauscher (11) und die mindestens eine reversible Elektrolysezelle (1) in Reihe verbunden sind, um einen geschlossenen Kreislauf auszubilden; und wobei
die wässrige alkalische Lösung von KOH in dem Kanal (2) eine Konzentration von Kaliumhydroxid (KOH) von zwischen 35 Gew.-/Vol.-% bis 55 Gew.-/Vol.-% aufweist, sich bei einer Temperatur zwischen 150 °C und 374 °C befindet und sich in einem Zustand mit einem Mindestdruck zwischen 2,2 bar und 129,1 bar befindet, wobei der Mindestdruck mindestens der niedrigste Druck ist, der der wässrigen alkalischen Lösung von KOH ermöglicht, sich in dem flüssigen Zustand zu halten, und wobei das Verfahren umfasst
I) Herstellen der wässrigen alkalischen Lösung von KOH, die eine Kaliumhydroxid-Konzentration (KOH) zwischen 35 Gew.-/Vol.-% und 55 Gew.- /Vol.-% aufweist, in dem Mischer;
II) Erhitzen der wässrigen alkalischen Lösung von KOH auf eine Temperatur von zwischen 150 °C und 374 °C;
III) Erhöhen des Drucks, um die wässrige alkalische Lösung von KOH in der flüssigen Phase bei einem Mindestdruck zwischen 2,2 bar und 129,1 bar zu halten;
IV) Drücken des Wassers in den Kanal (2), so dass das Wasser durch die hydrophobe Schicht (3) jeder Elektrode hindurchverläuft und die jeweilige Katalysatorschicht (5), um eine Reduktionsphase des Wasserstoffs oder eine Oxidationsphase des Sauerstoffs zu katalysieren und die poröse Elektrodenschicht (4) erreicht, um die Reduktion beziehungsweise die Oxidation herbeizuführen;
V) Sammeln von gasförmigem Wasserstoff und Sauerstoff, der aus Schritt IV) freigegeben wird.

**2.** Verfahren nach Anspruch 1, wobei die wässrige alkalische Lösung von KOH in einem beliebigen der folgenden Zuständen von Temperatur-, Druck- und KOH-Konzentration vorliegt:

- bei einer Temperatur von 150 °C der Mindestdruck zwischen 2,2 bar bei einer KOH-Konzentration von 55 Gew.-/Vol.-% und 3,3 bar bei einer KOH-Konzentration von 35 Gew.-/Vol.-% liegt;
- bei einer Temperatur von 160 °C der Mindestdruck zwischen 2,9 bar bei einer KOH-Konzentration von 55 Gew.-/Vol.-% und 4,2 bar bei einer KOH-Konzentration von 35 Gew.-/Vol.-% liegt;
- bei einer Temperatur von 170 °C der Mindestdruck zwischen 3,6 bar bei einer KOH-Konzentration von 55 Gew.-/Vol.-% und 5,4 bar bei einer KOH-Konzentration von 35 Gew.-/Vol.-% liegt;
- bei einer Temperatur von 180 °C der Mindestdruck zwischen 4,5 bar bei einer KOH-Konzentration von 55 Gew.-/Vol.-% und 6,8 bar bei einer KOH-Konzentration von 35 Gew.-/Vol.-% liegt;
- bei einer Temperatur von 190 °C der Mindestdruck zwischen 5,6 bar bei einer KOH-Konzentration von 55 Gew.-/Vol.-% und 8,5 bar bei einer KOH-Konzentration von 35 Gew.-/Vol.-% liegt;
- bei einer Temperatur von 200 °C der Mindestdruck zwischen 6,8 bar bei einer KOH-Konzentration von 55 Gew.-/Vol.-% und 10,5 bar bei einer KOH-Konzentration von 35 Gew.-/Vol.-% liegt;
- bei einer Temperatur von 210 °C der Mindestdruck zwischen 8,2 bar bei einer KOH-Konzentration von 55 Gew.-/Vol.-% und 12,7 bar bei einer KOH-Konzentration von 35 Gew.-/Vol.-% liegt;
- bei einer Temperatur von 220 °C der Mindestdruck zwischen 9,8 bar bei einer KOH-Konzentration von 55 Gew.-/Vol.-% und 15,4 bar bei einer KOH-Konzentration von 35Gew.-/Vol.-% liegt;
- bei einer Temperatur von 230 °C der Mindestdruck zwischen 11,6 bar bei einer KOH-Konzentration von 55 Gew.-/Vol.-% und 18,4 bar bei einer KOH-Konzentration von 35 % w/v liegt;
- bei einer Temperatur von 240 °C der Mindestdruck zwischen 13,6 bar bei einer KOH-Konzentration von 55 Gew.-/Vol.-% und 21,8 bar bei einer KOH-Konzentration von 35 Gew.-/Vol.-% liegt;
- bei einer Temperatur von 250 °C der Mindestdruck zwischen 15,9 bar bei einer KOH-Konzentration von 55 Gew.-/Vol.-% und 25,7 bar bei einer KOH-Konzentration von 35 Gew.-/Vol.-% liegt;
- bei einer Temperatur von 260 °C der Mindestdruck zwischen 18,4 bar bei einer KOH-Konzentration von 55 Gew.-/Vol.-% und 30 bar bei einer KOH-Konzentration von 35 Gew.-/Vol.-% liegt;
- bei einer Temperatur von 270 °C der Mindestdruck zwischen 21,3 bar bei einer KOH-Konzentration von 55 Gew.-/Vol.-% und 34,9 bar bei einer KOH-Konzentration von 35 Gew.-/Vol.-% liegt;
- bei einer Temperatur von 280 °C der Mindestdruck zwischen 24,4 bar bei einer KOH-Konzentration von 55 Gew.-/Vol.-% und 40,4 bar bei einer KOH-Konzentration von 35 Gew.-/Vol.-% liegt;
- bei einer Temperatur von 290 °C der Mindestdruck zwischen 27,9 bar bei einer KOH-Konzentration von 55 Gew.-/Vol.-% und 46,5 bar bei einer KOH-Konzentration von 35 Gew.-/Vol.-% liegt;

- bei einer Temperatur von 300 °C der Mindestdruck zwischen 31,8 bar bei einer KOH-Konzentration von 55 Gew.-/Vol.-% und 53,3 bar bei einer KOH-Konzentration von 35 Gew.-/Vol.-% liegt;
- bei einer Temperatur von 310 °C der Mindestdruck zwischen 36 bar bei einer KOH-Konzentration von 55 Gew.-/Vol.-% und 60,8 bar bei einer KOH-Konzentration von 35 Gew.-/Vol.-% liegt;
- bei einer Temperatur von 320 °C der Mindestdruck zwischen 40,6 bar bei einer KOH-Konzentration von 55 Gew.-/Vol.-% und 69,1 bar bei einer KOH-Konzentration von 35 Gew.-/Vol.-% liegt;
- bei einer Temperatur von 330 °C der Mindestdruck zwischen 45,6 bar bei einer KOH-Konzentration von 55 Gew.-/Vol.-% und 78,1 bar bei einer KOH-Konzentration von 35 Gew.-/Vol.-% liegt;
- bei einer Temperatur von 340 °C der Mindestdruck zwischen 51,1 bar bei einer KOH-Konzentration von 55 Gew.-/Vol.-% und 88,1 bar bei einer KOH-Konzentration von 35 Gew.-/Vol.-% liegt;
- bei einer Temperatur von 350 °C der Mindestdruck zwischen 57 bar bei einer KOH-Konzentration von 55 Gew.-/Vol.-% und 98,9 bar bei einer KOH-Konzentration von 35 Gew.-/Vol.-% liegt;
- bei einer Temperatur von 360 °C der Mindestdruck zwischen 63,4 bar bei einer KOH-Konzentration bei 55 Gew.-/Vol.-% und 110,8 bar bei einer KOH-Konzentration von 35 Gew.-/Vol.-% liegt;
- bei einer Temperatur von 370 °C der Mindestdruck zwischen 70,4 bar bei einer KOH-Konzentration von 55 Gew.-/Vol.-% und 123,6 bar bei einer KOH-Konzentration von 35 Gew.-/Vol.-% liegt;
- bei einer Temperatur von 374 °C der Mindestdruck zwischen 73,3 bar bei einer KOH-Konzentration von 55 Gew.-/Vol.-% und 129,1 bar bei einer KOH-Konzentration von 35 Gew.-/Vol.-% liegt.

**3.** Verfahren nach Anspruch 2, wobei die wässrige alkalische Lösung von KOH in eine beliebigen der Zuständen von Temperatur, Mindestdruck und Konzentration von KOH, in der folgenden Wertetabelle angegeben werden:

| % KOH (p/v) | 35 | 45 | 55 |
|---|---|---|---|
| T [°C] | P min [bar] | P min [bar] | P min [bar] |
| 150 | 3,3 | 2,7 | 2,2 |
| 160 | 4,2 | 3,6 | 2,9 |
| 170 | 5,4 | 4,5 | 3,6 |
| 180 | 6,8 | 5,7 | 4,5 |
| 190 | 8,5 | 7,1 | 5,6 |
| 200 | 10,5 | 8,7 | 6,8 |
| 210 | 12,7 | 10,6 | 8,2 |
| 220 | 15,4 | 12,7 | 9,8 |
| 230 | 18,4 | 15,2 | 11,6 |
| 240 | 21,8 | 18 | 13,6 |
| 250 | 25,7 | 21,2 | 15,9 |
| 260 | 30 | 24,7 | 18,4 |
| 270 | 34,9 | 28,8 | 21,3 |
| 280 | 40,4 | 33,2 | 24,4 |
| 290 | 46,5 | 38,2 | 27,9 |
| 300 | 53,3 | 43,7 | 31,8 |
| 310 | 60,8 | 49,8 | 36 |
| 320 | 69,1 | 56,5 | 40,6 |
| 330 | 78,1 | 63,9 | 45,6 |
| 340 | 88,1 | 71,9 | 51,1 |
| 350 | 98,9 | 80,7 | 57 |
| 360 | 110,8 | 90,2 | 63,4 |
| 370 | 123,6 | 100,6 | 70,4 |
| 374 | 129,1 | 105 | 73,3 |

**4.** Verfahren nach einem der vorstehenden Ansprüche, wobei in der wässrigen alkalischen Lösung von KOH in einer Konzentration von 35 Gew.- /Vol.-% KOH, der Mindestdruck zwischen 3,3 und 129,1 bar zwischen 150 °C und 374 °C variiert, bei einer Konzentration von 45 Gew.-/Vol.-% KOH der Mindestdruck zwischen 3,3 und 105 bar zwischen 150 °C und 374 °C variiert und bei einer Konzentration von 35 Gew.-/Vol.-% KOH der Mindestdruck zwischen 2,2 und 73,3 bar zwischen 150 °C und 374 °C variiert.

5. Verfahren nach einem der Ansprüche 1 bis 3, wobei die wässrige alkalische Lösung von KOH eine KOH-Konzentration bei 35 %-50 Gew.-/Vol.-%, vorzugsweise bei 45 Gew.-/Vol.-%, bei einer Temperatur von 200 °C und einem Mindestdruck von 8,7 bar, Temperatur von 250 °C und Mindestdruck von 21,2 bar, oder Temperatur von 300 °C und Mindestdruck von 43,7 bar, aufweist.

6. Verfahren nach einem der vorstehenden Ansprüche, wobei die Steuermittel (10) ein Ventil (10) sind und konfiguriert sind, um einen Differenzdruckzustand zwischen dem Inneren des Kanals (2) und der Elektrodenschicht zu halten.

7. Verfahren nach einem der vorstehenden Ansprüche, wobei die hydrophobe Schicht (3) Aluminosilicatgeopolymere oder einen 1 µm-3 µm Film aus amorpher Kohlenstoff-Silizium-Beschichtung umfasst, der mittels des PACVD-Prozesses (Prozesses einer Plasma-unterstützten chemischen Gasphasenabscheidung) erhalten wird.

8. Verfahren nach einem der Ansprüche 1 bis 6, wobei die hydrophobe Schicht (3) Aluminosilicatgeopolymere umfasst.

9. Verfahren nach einem der Ansprüche 1 bis 6, wobei die hydrophobe Schicht (3) einen 1 µm-3 µm Film aus amorpher Kohlenstoff-Silizium-Beschichtung umfasst, der durch den PACVD-Prozess (Prozess der Plasma-unterstützten chemischen Gasphasenabscheidung) erhalten wird.

## Revendications

1. Procédé pour l'électrolyse de l'eau en hydrogène et en oxygène au moyen d'un électrolyseur (7) alcalin, dans lequel l'électrolyseur comprend au moins une cellule réversible pour électrolyse (1) comprenant un canal ; un réservoir de mélange (8) pour le mélange d'eau et d'hydroxyde de potassium (KOH) afin de former une solution aqueuse alcaline de KOH ; des moyens d'acheminement (9) pour l'acheminement de ladite solution alcaline aqueuse de KOH sous pression dans ledit canal (2) à partir dudit réservoir de mélange (8) ; des moyens de régulation pour la régulation de la pression (10) à l'intérieur du canal (2) et un échangeur de chaleur (11) pour le chauffage de la solution alcaline aqueuse de KOH ;

   dans lequel ladite cellule réversible pour électrolyse (1) comprend au moins deux électrodes multicouches (1a, 1b), dans lequel lesdites électrodes multicouches (1a, 1b) sont disposées face à face afin de définir le canal (2) pour le passage de la solution aqueuse alcaline de KOH, et dans lequel chacune desdites électrodes multicouches (1a, 1b) comprend, partant dudit canal (2), une couche hydrophobe (3), une couche de catalyseur (5) permettant de catalyser une étape de réduction dudit hydrogène ou une étape d'oxydation dudit oxygène, une couche d'électrode poreuse (4) permettant de provoquer ladite réduction ou ladite oxydation, et une plaque bipolaire (6), dans lequel ladite couche hydrophobe (3) comprend des géopolymères d'aluminosilicate ou des polymères de polytétrafluoroéthylène (PTFE) ou des polymères perfluoroalcoxy (PFA) ou un film de 1 µm à 3 µm de revêtement de carbone-silicium amorphe obtenu par le procédé de dépôt chimique en phase vapeur assisté par plasma (PACVD) ; et dans lequel ledit canal (2) présente une entrée raccordée auxdits moyens d'acheminement et une sortie, et dans lequel ledit réservoir de mélange (8), lesdits moyens d'acheminement (9), lesdits moyens de régulation (10) de la pression, ledit échangeur de chaleur (11) et ladite au moins une cellule réversible pour électrolyse (1) sont raccordés en série pour former un circuit fermé ; et dans lequel

   ladite solution alcaline aqueuse de KOH présente, dans le canal (2), une concentration d'hydroxyde de potassium (KOH) comprise entre 35 % et 55 % en p/v, est à une température comprise entre 150 °C et 374 °C, et est dans un état de pression minimale comprise entre 2,2 bar et 129,1 bar, dans lequel ladite pression minimale est au moins la pression la plus basse qui permet à la solution alcaline aqueuse de KOH d'être maintenue à l'état liquide, et dans lequel le procédé comprend

   I) la préparation, dans le mélangeur, de la solution aqueuse alcaline de KOH présentant une concentration d'hydroxyde de potassium (KOH) comprise entre 35 % et 55 % en p/v ;

   II) le chauffage de ladite solution aqueuse alcaline de KOH à une température comprise entre 150 °C et 374 °C ;

   III) l'augmentation de la pression pour maintenir la solution alcaline aqueuse de KOH dans la phase liquide à une pression minimale comprise entre 2,2 bar et 129,1 bar ;

   IV) le forçage de l'eau dans ledit canal (2) de sorte que l'eau passe à travers la couche hydrophobe (3) de chaque électrode et atteint la couche catalytique (5) respective pour catalyser une phase de réduction dudit hydrogène ou une phase d'oxydation dudit oxygène et la couche poreuse de l'électrode (4) pour provoquer ladite réduction et ladite oxydation respectivement ;

   V) la collecte de l'hydrogène et de l'oxygène gazeux libérés à l'étape IV).

**2.** Procédé selon la revendication 1, dans lequel ladite solution alcaline aqueuse de KOH se trouve dans l'une quelconque des conditions suivantes de température, de pression et de concentration de KOH :

- à une température de 150 °C, la pression minimale est comprise entre 2,2 bar à une concentration de KOH de 55 % en p/v et 3,3 bar à une concentration de KOH de 35 % en p/v ;
- à une température de 160 °C, la pression minimale est comprise entre 2,9 bar à une concentration de KOH de 55 % en p/v et 4,2 bar à une concentration de KOH de 35 % en p/v ;
- à une température de 170 °C, la pression minimale est comprise entre 3,6 bar à une concentration de KOH de 55 % en p/v et 5,4 bar à une concentration de KOH de 35 % en p/v ;
- à une température de 180 °C, la pression minimale est comprise entre 4,5 bar à une concentration de KOH de 55 % en p/v et 6,8 bar à une concentration de KOH de 35 % en p/v ;
- à une température de 190 °C, la pression minimale est comprise entre 5,6 bar à une concentration de KOH de 55 % en p/v et 8,5 bar à une concentration de KOH de 35 % en p/v ;
- à une température de 200 °C, la pression minimale est comprise entre 6,8 bar à une concentration de KOH de 55 % en p/v et 10,5 bar à une concentration de KOH de 35 % en p/v ;
- à une température de 210 °C, la pression minimale est comprise entre 8,2 bar à une concentration de KOH de 55 % en p/v et 12,7 bar à une concentration de KOH de 35 % en p/v ;
- à une température de 220 °C, la pression minimale est comprise entre 9,8 bar à une concentration de KOH de 55 % en p/v et 15,4 bar à une concentration de KOH de 35 % en p/v ;
- à une température de 230 °C, la pression minimale est comprise entre 11,6 bar à une concentration de KOH de 55 % en p/v et 18,4 bar à une concentration de KOH de 35 % en p/v ;
- à une température de 240 °C, la pression minimale est comprise entre 13,6 bar à une concentration de KOH de 55 % en p/v et 21,8 bar à une concentration de KOH de 35 % en p/v ;
- à une température de 250 °C, la pression minimale est comprise entre 15,9 bar à une concentration de KOH de 55 % en p/v et 25,7 bar à une concentration de KOH de 35 % en p/v ;
- à une température de 260 °C, la pression minimale est comprise entre 18,4 bar à une concentration de KOH de 55 % en p/v et 30 bar à une concentration de KOH de 35 % en p/v ;
- à une température de 270 °C, la pression minimale est comprise entre 21,3 bar à une concentration de KOH de 55 % en p/v et 34,9 bar à une concentration de KOH de 35 % en p/v ;
- à une température de 280 °C, la pression minimale est comprise entre 24,4 bar à une concentration de KOH de 55 % en p/v et 40,4 bar à une concentration de KOH de 35 % en p/v ;
- à une température de 290 °C, la pression minimale est comprise entre 27,9 bar à une concentration de KOH de 55 % en p/v et 46,5 bar à une concentration de KOH de 35 % en p/v ;
- à une température de 300 °C, la pression minimale est comprise entre 31,8 bar à une concentration de KOH de 55 % en p/v et 53,3 bar à une concentration de KOH de 35 % en p/v ;
- à une température de 310 °C, la pression minimale est comprise entre 36 bar à une concentration de KOH de 55 % en p/v et 60,8 bar à une concentration de KOH de 35 % en p/v ;
- à une température de 320 °C, la pression minimale est comprise entre 40,6 bar à une concentration de KOH de 55 % en p/v et 69,1 bar à une concentration de KOH de 35 % en p/v ;
- à une température de 330 °C, la pression minimale est comprise entre 45,6 bar à une concentration de KOH de 55 % en p/v et 78,1 bar à une concentration de KOH de 35 % en p/v ;
- à une température de 340 °C, la pression minimale est comprise entre 51,1 bar à une concentration de KOH de 55 % en p/v et 88,1 bar à une concentration de KOH de 35 % en p/v ;
- à une température de 350 °C, la pression minimale est comprise entre 57 bar à une concentration de KOH de 55 % en p/v et 98,9 bar à une concentration de KOH de 35 % en p/v ;
- à une température de 360 °C, la pression minimale est comprise entre 63,4 bar à une concentration de KOH de 55 % en p/v et 110,8 bar à une concentration de KOH de 35 % en p/v ;
- à une température de 370 °C, la pression minimale est comprise entre 70,4 bar à une concentration de KOH de 55 % en p/v et 123,6 bar à une concentration de KOH de 35 % en p/v ;
- à une température de 374 °C, la pression minimale est comprise entre 73,3 bar à une concentration de KOH de 55 % en p/v et 129,1 bar à une concentration de KOH de 35 % en p/v.

**3.** Procédé selon la revendication 2, dans laquelle ladite solution alcaline aqueuse de KOH se trouve dans l'une des conditions de température, de pression minimale et de concentration de KOH indiquées dans le tableau de valeurs suivant :

| % de KOH (p/v) | 35 | 45 | 55 |
|---|---|---|---|
| T [°C] | P min [bar] | P min [bar] | P min [bar] |
| 150 | 3,3 | 2,7 | 2,2 |
| 160 | 4,2 | 3,6 | 2,9 |
| 170 | 5,4 | 4,5 | 3,6 |
| 180 | 6,8 | 5,7 | 4,5 |
| 190 | 8,5 | 7,1 | 5,6 |
| 200 | 10,5 | 8,7 | 6,8 |
| 210 | 12,7 | 10,6 | 8,2 |
| 220 | 15,4 | 12,7 | 9,8 |
| 230 | 18,4 | 15,2 | 11,6 |
| 240 | 21,8 | 18 | 13,6 |
| 250 | 25,7 | 21,2 | 15,9 |
| 260 | 30 | 24,7 | 18,4 |
| 270 | 34,9 | 28,8 | 21,3 |
| 280 | 40,4 | 33,2 | 24,4 |
| 290 | 46,5 | 38,2 | 27,9 |
| 300 | 53,3 | 43,7 | 31,8 |
| 310 | 60,8 | 49,8 | 36 |
| 320 | 69,1 | 56,5 | 40,6 |
| 330 | 78,1 | 63,9 | 45,6 |
| 340 | 88,1 | 71,9 | 51,1 |
| 350 | 98,9 | 80,7 | 57 |
| 360 | 110,8 | 90,2 | 63,4 |
| 370 | 123,6 | 100,6 | 70,4 |
| 374 | 129,1 | 105 | 73,3 |

**4.** Procédé selon l'une quelconque des revendications précédentes, dans lequel dans ladite solution aqueuse alcaline de KOH à la concentration de 35 % en p/v de KOH, la pression minimale varie entre 3,3 et 129,1 bar entre 150 °C et 374 °C ; à la concentration de 45 % en p/v de KOH, la pression minimale varie entre 3,3 et 105 bar entre 150 °C et 374 °C ; et à la concentration de 35 % en p/v de KOH, la pression minimale varie entre 2,2 et 73,3 bar entre 150 °C et 374 °C.

**5.** Procédé selon l'une quelconque des revendications 1 à 3, dans lequel ladite solution aqueuse alcaline de KOH présente une concentration de KOH allant de 35 % à 50 % en p/v, de préférence de 45 % en p/v, avec une température de 200 °C et une pression minimale de 8,7 bar, une température de 250 °C et une pression minimale de 21,2 bar, ou une température de 300 °C et une pression minimale de 43,7 bar.

**6.** Procédé selon l'une quelconque des revendications précédentes, dans lequel lesdits moyens de régulation (10) sont une vanne (10) et sont configurés pour maintenir une condition de pression différentielle entre l'intérieur du canal (2) et la couche d'électrode.

**7.** Procédé selon l'une quelconque des revendications précédentes, dans lequel ladite couche hydrophobe (3) comprend des géopolymères d'aluminosilicate ou un film de 1 μm à 3 μm de revêtement de carbone-silicium amorphe obtenu au moyen du procédé de dépôt chimique en phase vapeur assisté par plasma (PACVD).

**8.** Procédé selon l'une quelconque des revendications 1 à 6, dans lequel ladite couche hydrophobe (3) comprend des géopolymères d'aluminosilicate.

**9.** Procédé selon l'une quelconque des revendications 1 à 6, dans lequel ladite couche hydrophobe (3) comprend un film de 1 μm à 3 μm de revêtement carbone-silicium amorphe obtenu par le procédé de dépôt chimique en phase vapeur assisté par plasma (PACVD).

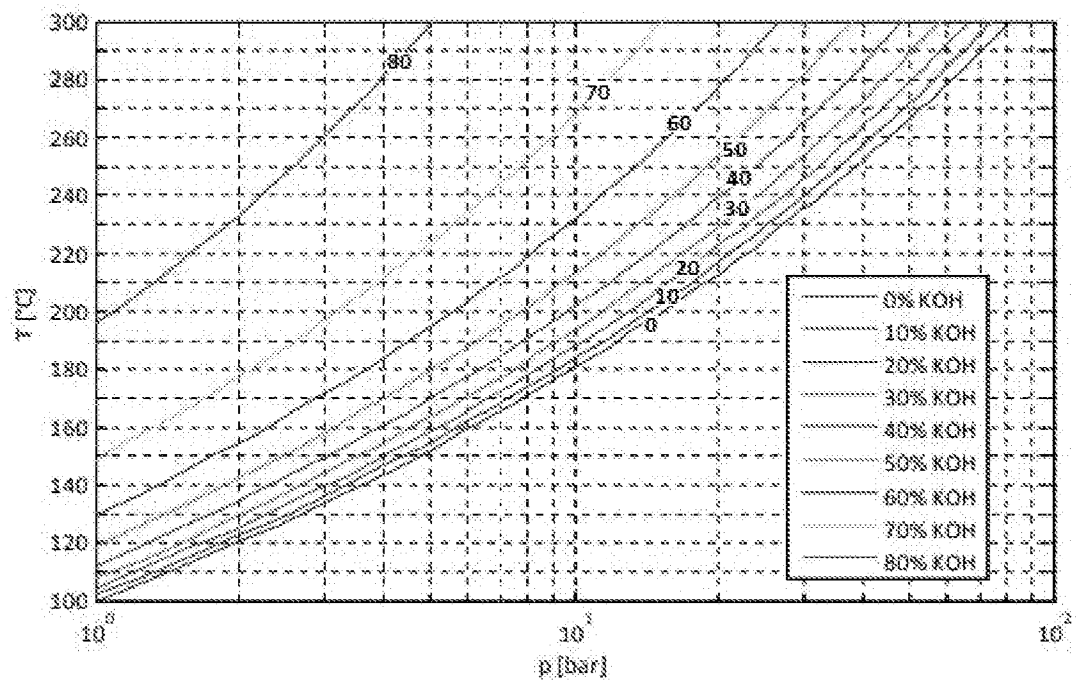


Figure 1a

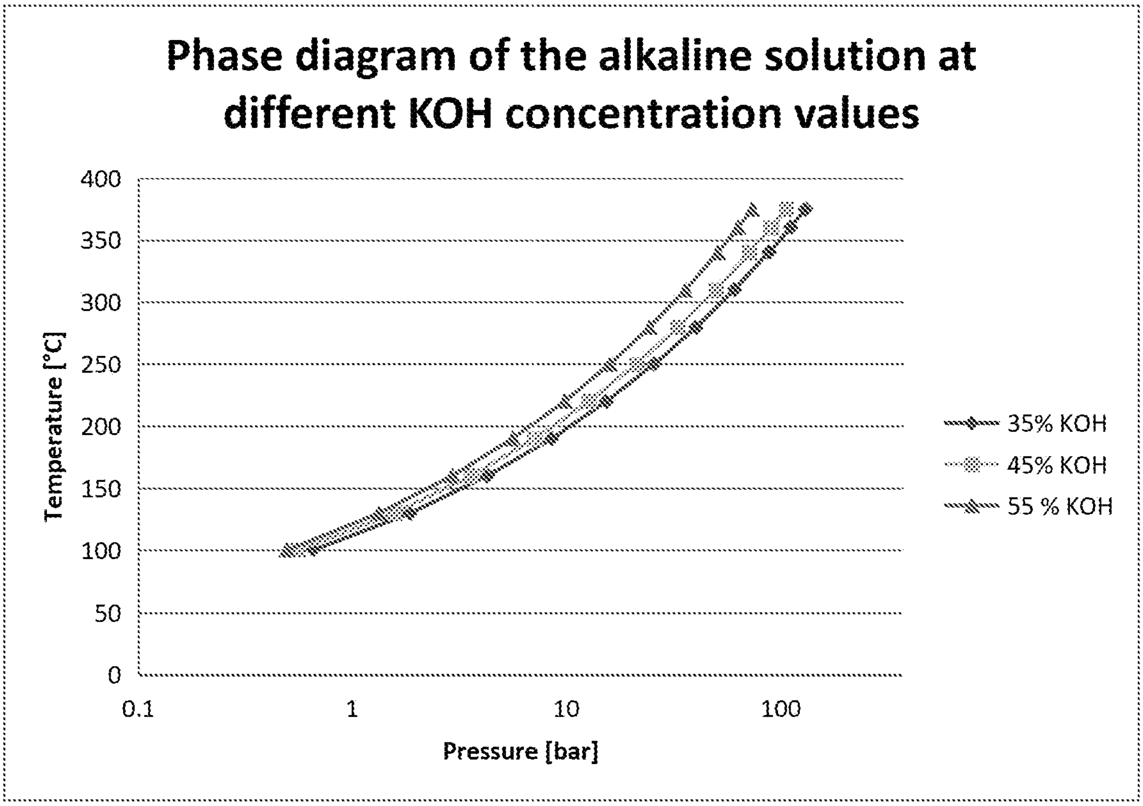


Figure 1b

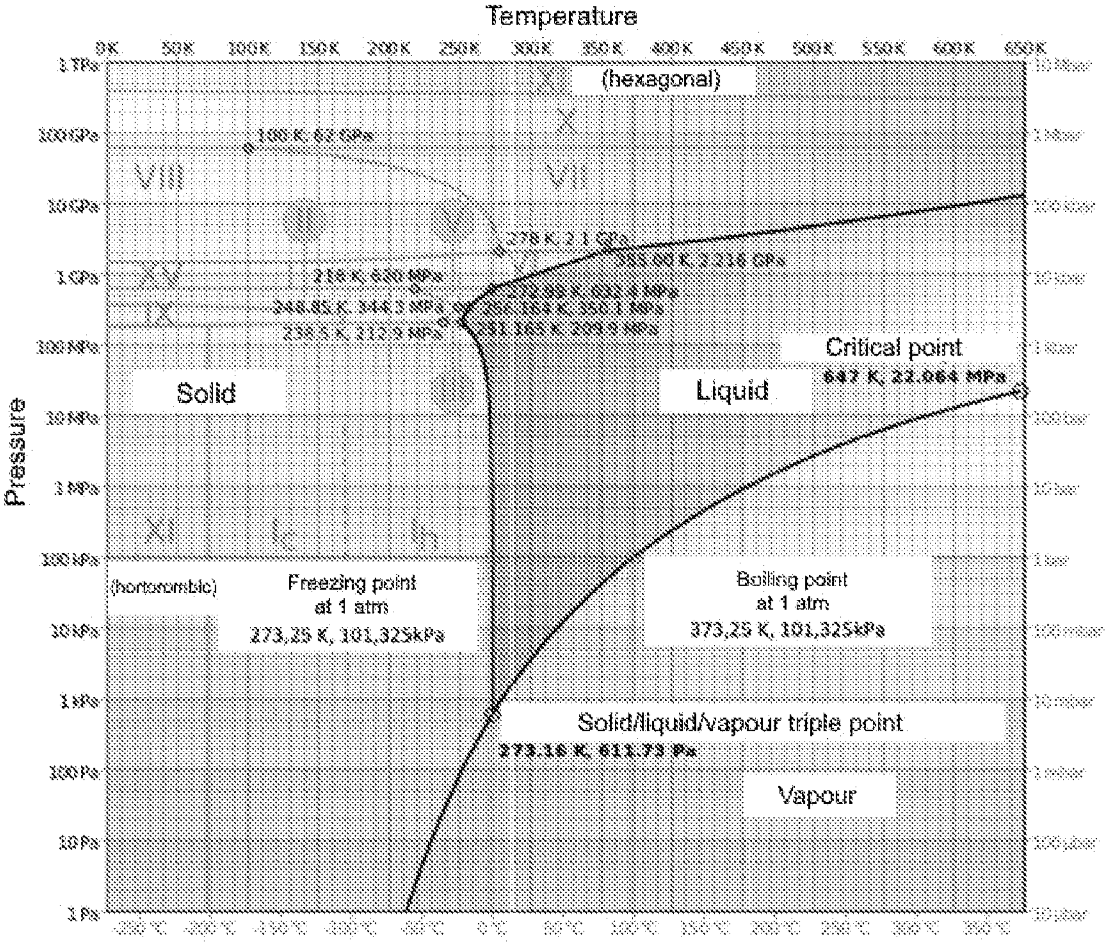


Figure 2

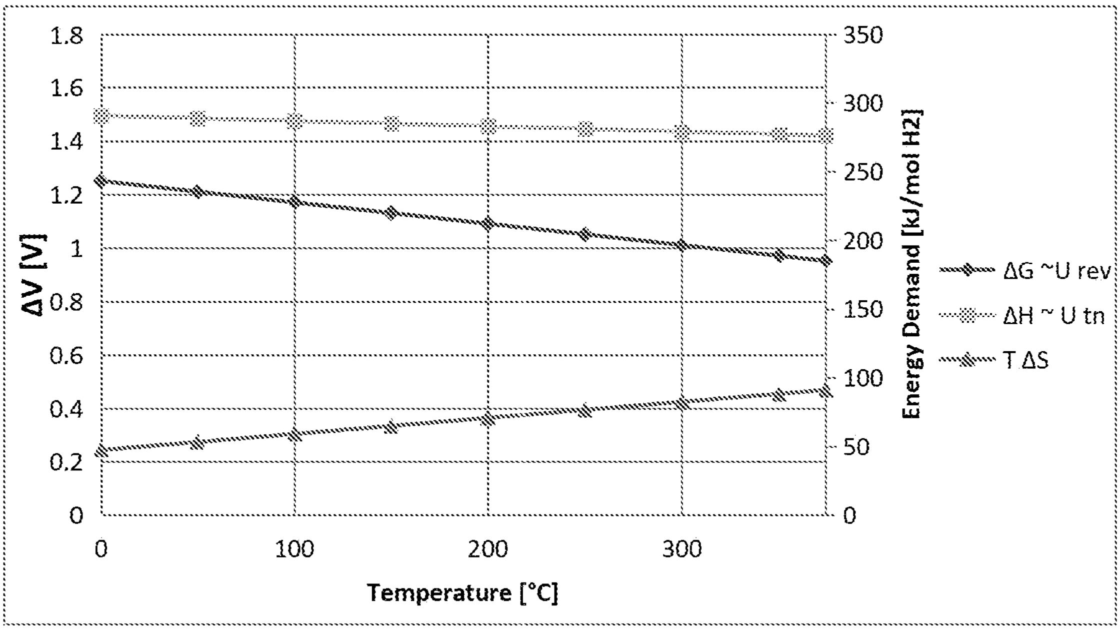


Figure 3

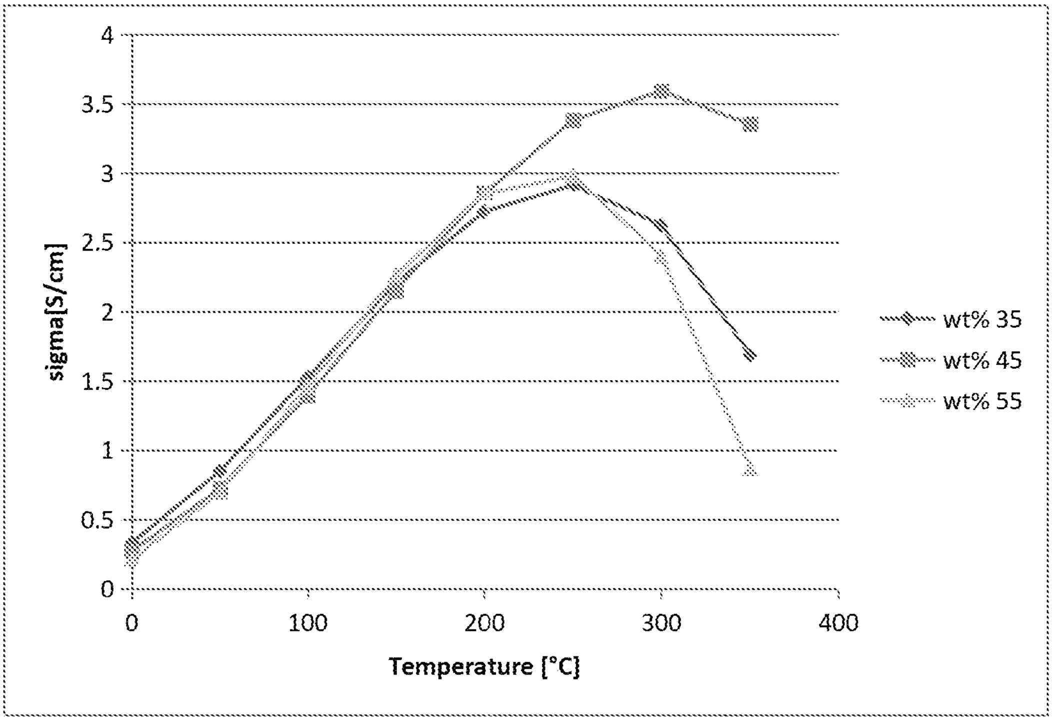


Figure 4

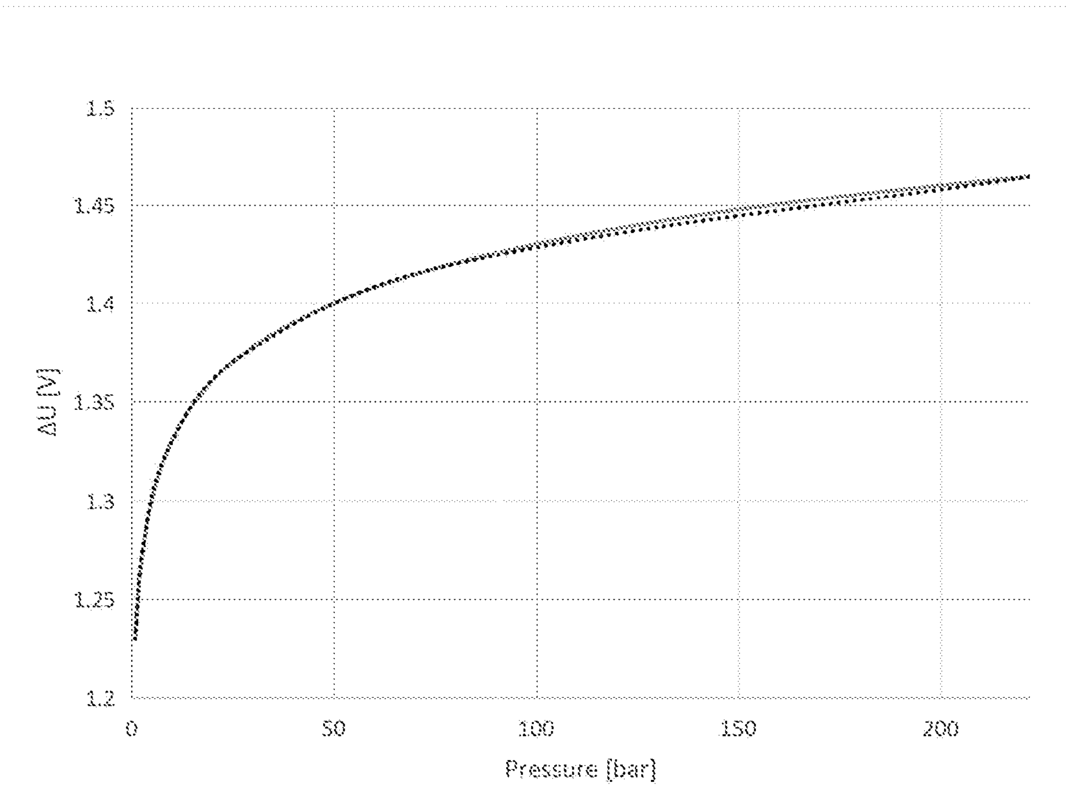


Figure 5

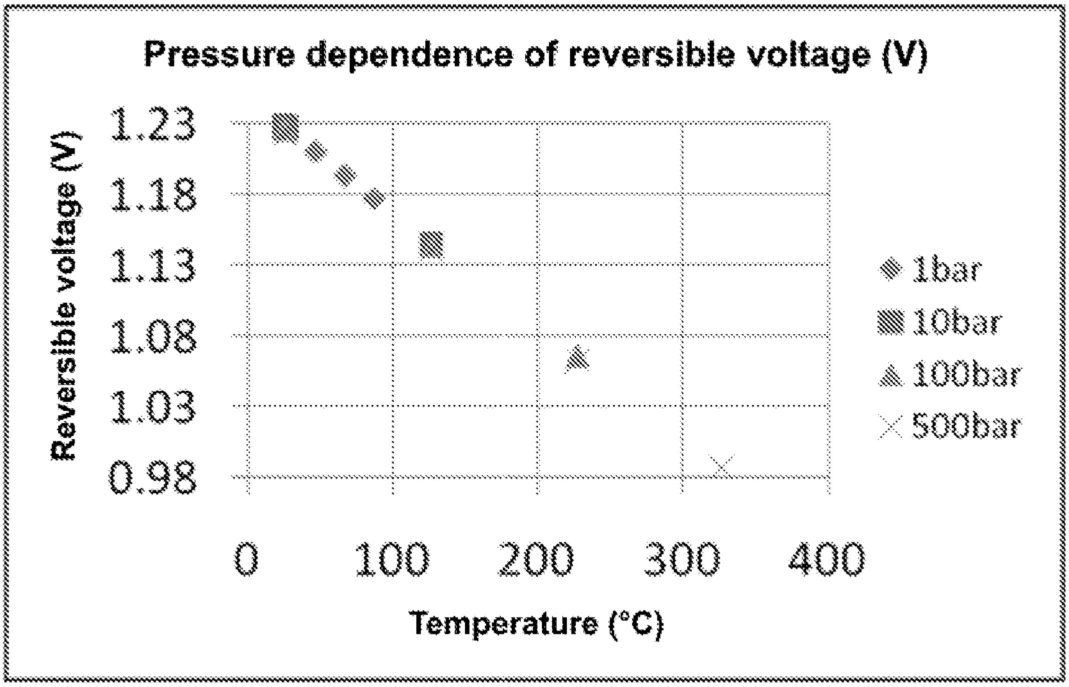


Figure 6

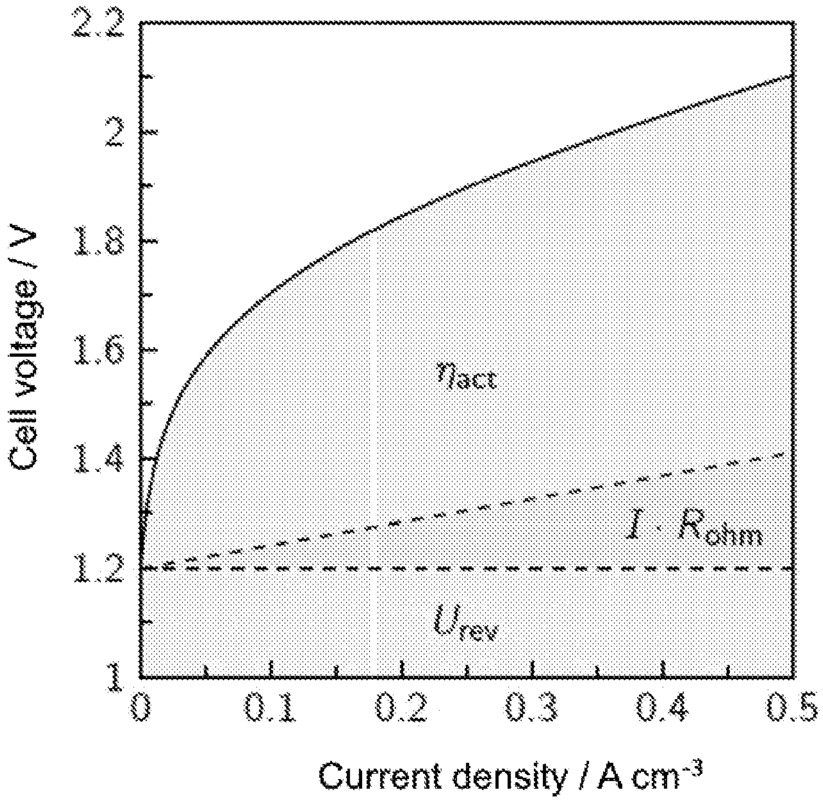


Figure 7

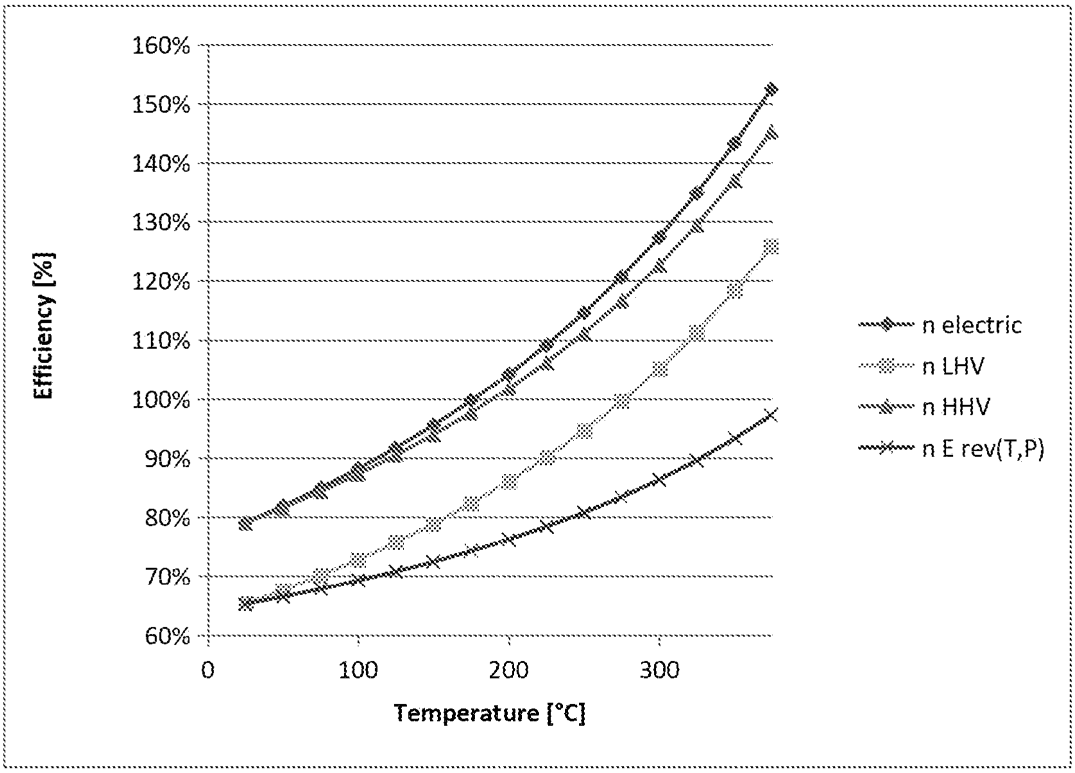


Figure 8

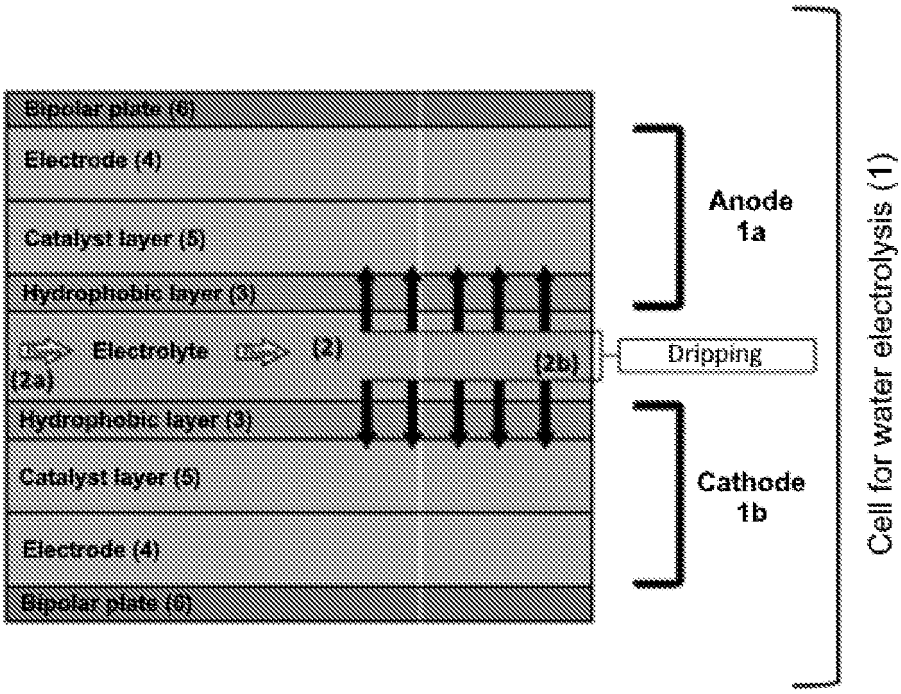


Figure 9

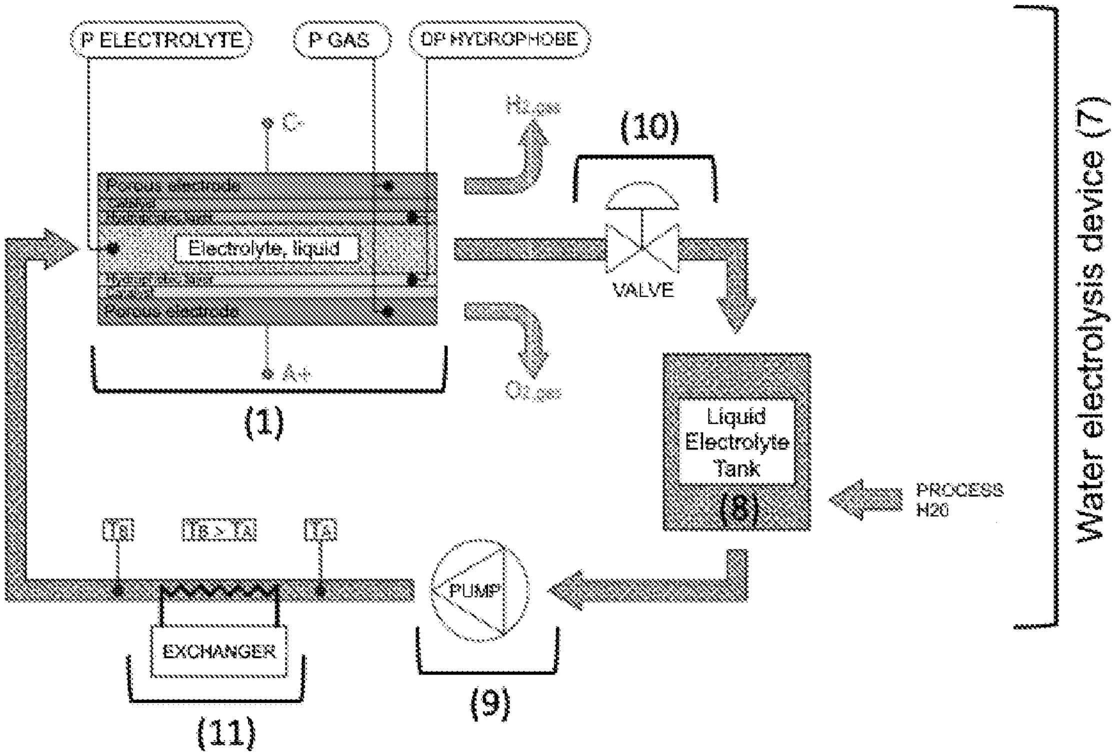
P ELECTROLYTE
P GAS
DP HYDROPHOBE
C-
Electrolyte, liquid
A+
(1)
H2,gas
O2,gas
(10)
VALVE
Liquid Electrolyte Tank
(8)
PROCESS H20
Water electrolysis device (7)
PUMP
(9)
TB
TB > TA
TA
EXCHANGER
(11)

Figure 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2836625 B1, Allebrod
- WO 2004113590 A2, Melosi
- US 2021238754 A1


### Non-patent literature cited in the description


- **MARINI et al.** *Electrochimica Acta*, 2012, vol. 82, 384-391